# EUROPEAN PATENT APPLICATION

(11) **EP 0 751 504 A2**
(43) Date of publication of application: **02.01.1997**
(21) Application number: 96304786.5
(22) Date of filing: 28.06.1996
(51) Int. Cl.: G11B 7/00, G11B 7/09, G11B 7/007, G11B 11/10

(54) **Data reply device and method for replaying data using the data replay device**

(30) Priority: 28.06.1995 JP 161319/95; 28.06.1995 JP 161320/95; 28.06.1995 JP 161321/95; 22.11.1995 JP 304503/95; 22.11.1995 JP 304504/95
(71) Applicant: NIKON CORPORATION, Tokyo 100 (JP)
(72) Inventor: Ishi, Yuwa, Kanagawa-ken (JP)
(74) Representative: Burke, Steven David

(57) **Abstract**

A data replay device that replays data from a disc-shaped recording medium. The data replay device can read data from a recording medium where the data is recorded in at least one of concentric and spiral tracks, with the tracks being divided into two distinct types, land tracks and groove tracks. The data replay device illuminates the recording medium with laser light and measures the reflectance to determine what type of track is being illuminated. Based on the type of illuminated track, the data replay device follows that track as the disc rotates by way of a motor. A host computer receives information from the data replay device and sends opera- tional signals to the data replay device.

## Description

### CROSS REFERENCE TO RELATED APPLICATIONS

This application is based upon and claims priority from Japanese Patent Applications 07-161319, 07-161320, and 07-161321 filed June 28, 1995 and 07-304503 and 07-304504 filed November 22, 1995, the contents of all being incorporated herein by reference.

### BACKGROUND OF THE INVENTION

### 1. Field of the Invention

The present invention relates to a data replay device that replays data which has been recorded on an optical disc and the like type of recording medium.

### 2. Description of the Related Art

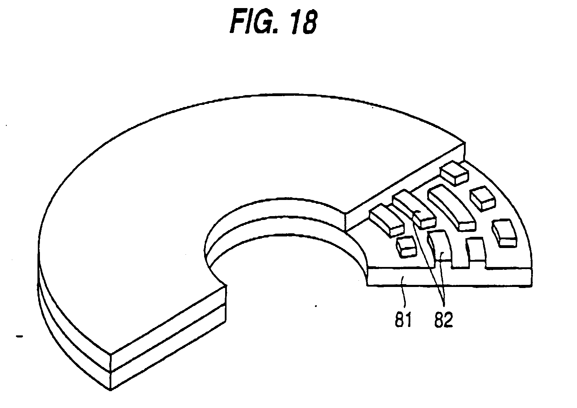

A replay device for a compact disc (CD) is an example of a known data replay device. FIG. 18 is a diagram showing the construction of a CD. As shown in FIG. 18, an array 82 of phase pits, or relief form, is formed in a transparent substrate 81, 1.2 mm thick. This is a data track. Then, audio data is recorded by means of phase pits whose length corresponds to the audio data.

When replaying data recorded on a CD, first, the CD rotates. Then, by means of a light beam shining from a replay head, a light spot having a smaller diameter than the phase pits is formed on the data track. The data is then read out by detecting the diffraction state of the light reflected from the light spot on the data track.

In the case that there is no phase pit in the position of the light spot, all of the reflected light from the data track returns to the replay head. Because of this, the data detector built into the replay head detects a large value. In the case that a phase pit is in a position to be hit by the light spot, the reflected light from the data track is diffracted by the phase pit. Because of this, a portion of the reflected light is reflected outside the playback head, and does not return to the replay head. A portion of the remaining light returns to the replay head. Namely, in the case that there is a phase pit in the position of the light spot, the data detector built into the replay head detects a smaller value than when no phase pit is present.

Generally, the diameter of the light beam from the replay head can be stepped down as far as the diffraction limit. Because of this, when using a data replay head with a built-in laser light source of wavelength 830 nm, the diameter of the light spot which illuminates the data track can be stepped down to less than 1 µm. Accordingly, the pits of the data track can be made 1.6 µm in size, and a large amount of data can be recorded.

As examples of other playback devices, there are magnetic disc devices or phase transition disc devices.

Other than that the playback principle of these devices uses the Kerr rotation effect of the reflected light or the reflectance change effect, since they are the same as a CD, a detailed description of them is omitted.

However, there is a very strong latent requirement to record more data on the recording medium.

Generally, it has been proposed to narrow the track pitch by making the replay beam diameter small, by means of making the wavelength of the replay head light source short.

However, there are limitations on the wavelength of the replay head light source. It is impossible to make the wavelength infinitely short.

On the other hand, when narrowing the tracks with a constant size replay head, the data bits of adjacent tracks also become illuminated by the light spot due to the replay head. As a result, the problem arises that, as well as the data of the intended replay track, the data of adjacent tracks also comes to be read out.

Accordingly, a data replay device is required which can replay only the data from the intended track, while suppressing the reading out of data from adjacent tracks.

The result of many investigations was that the land/groove method was discovered as a countermeasure for suppressing such readout from adjacent tracks. Generally, the tracks of recording media such as magnetic discs are formed by means of concentric or spiral grooves. Accordingly, ridge portions and trough portions are present on the recording surface. In the prior art recording media, data was recorded in either the ridge portions or the trough portions. In contrast to this, in a land/groove replay system, discs are used with data recorded on both the ridge portions (lands) and the trough portions (grooves).

This is a useful system, because the track pitch can be approximately halved. Because the effect of suppression of readout from adjacent tracks by means of the land/groove replay system is described in the following literature reference, a detailed description is omitted here.

The technology relating to phase change discs is described in "High Density Phase Change Discs by Means of Land & Groove Recording" (Collected papers, Phase Change Disc Recording Society, 5th. Symposium). Moreover, the technology in relation to magnetic discs is described in "Crosstalk Analysis of Land/Groove Magneto-Optical Recording" (Symposium on optical memory, 1994).

Moreover, not yet laid open at the time of the present application, Japanese Patent Applications 6-190695, 6-215137, and 6-215138 (all applications by the present assignee) also describe the effect of data readout suppression from adjacent tracks in a land/groove replay system.

Nevertheless, data could not be freely replayed from optional tracks In the prior art technology, because two kinds of data tracks, land tracks and groove tracks, are present in this land/groove system.

For example, when replaying data from the recording medium, by causing the light spot to move relative to the data track, the data recorded on the data track is replayed in succession. Specifically, in the replay of a CD, with the disc caused to rotate, the light spot is normally made to be on the data track by controlling the illumination position of the light spot. This kind of control is termed "tracking control".

The tracking control mechanism in the prior art device only corresponds to tracking with respect to either one of land tracks or groove tracks. The reason for this is that, because the tracking characteristics differ in land tracks and groove tracks, when performing tracking control according to the characteristics of one kind of track, it is not suitable as a tracking control for the other kind of track.

### SUMMARY OF THE INVENTION

The present invention has taken the above problems into account, and it is an object of the present invention to provide a data record medium playback device which can optionally perform playback of data with respect to both land and groove tracks.

With the present invention, the track pitch of a recording medium can be made substantially half that of the prior art track pitch. Accordingly, twice the amount of data than in the prior art can be recorded on the recording medium.

Furthermore, by means of the present invention, tracks of a first group and tracks of a second group can be optionally replayed. Accordingly, it can be used as a random access form of recording medium.

Moreover, no special construction of the head is necessary, and there is no increase in cost. Moreover, it can be applied, not only to a medium exclusively for replay use such as a CD, but also to a rewriteable kind of medium.

Objects of the present invention are achieved by a data replay device that includes an optical head including a laser light source, which illuminates with laser light the track surface of a disc-shaped data recording medium having, in at least one of concentric and spiral form, data tracks of a first group and data tracks of a second group, on which data is recorded. The data tracks of the first group and data tracks of the second group are present alternately at a difference of level in a radial direction of the disc-shaped recording medium. The data replay device also includes a detection circuit which detects whether the track which the laser light is illuminating is from the first group or from the second group.

Objects of the present invention are also achieved by a data replay method, which comprises the steps of illuminating laser light on a track surface of a disc-shaped data recording medium, on which there are present, in at least one of a concentric and spiral form, data tracks of a first group and data tracks of a second group, on which data is recorded, the data tracks of the first group and data tracks of the second group being present alternately at a difference of level in a radial direction of said recording medium, and then detecting whether the track which the laser light is illuminating is from said first group or from said second group.

Additional objects and advantages of the invention will be set forth in part in the description which follows and, in part, will be obvious from the description, or may be learned by practice of the invention.

### BRIEF DESCRIPTION OF THE DRAWINGS

These and other objects of the invention will become apparent to one skilled in the art, along with methods of use and alternative arrangements from a study of the following detailed description and the appended claims and drawings, all of which form a part of this specification. In the drawings:
FIG. 1 is a diagram showing a data recording medium replay device according to the present invention;
FIG. 2 is a diagram showing the track structure of a data recording medium used in a data recording medium replay device according to the embodiments of the present invention;
FIG. 3 is a diagram illustrating the construction of a data recording medium replay device according to the embodiments of the present invention;
FIG. 4 is a block diagram showing the construction of the servo controller and system controller of a data recording medium replay device according to a first embodiment of the present invention;
FIGS. 5(a)-5(c) are diagrams depicting the change of polarity of the track error signal of a data recording medium replay device according to an embodiment of the present invention;
FIG. 6 is a block diagram showing the construction of the servo controller and system controller of a data recording medium replay device according to a second embodiment of the present invention;
FIGS. 7(a)-7(c) are diagrams illustrating the method of determining whether a track illuminated by a light beam is a land track or a groove track from the change of polarity of the track error signal, in a data recording medium replay device according to the second embodiment of the present invention;
FIG. 8 is a block diagram depicting the construction of an example of a land/groove discrimination circuit of a data recording medium replay device according to a second embodiment of the present invention;
FIG. 9 is a block diagram showing the construction of the servo controller and system controller of a data recording medium replay device according to a third embodiment of the present invention;
FIGS. 10(a)-10(c) are diagrams showing the sector format of a data recording medium used in a data recording medium replay device according to the third embodiment of the present invention;
FIG. 11 is a block diagram depicting the construction of the servo controller and system controller of a data recording medium replay device according to a fourth embodiment of the present invention;
FIGS 12(a)-12(c) are diagrams illustrating the change of the track error signal and the change of offset of the focus error signal, in the case in which the illumination position of the light spot has moved radially in the outside direction of the disc, in a data replay device according to the fourth embodiment of the present invention;
FIGS. 13(a)-13(c) are diagrams showing the change of the track error signal and the change of offset of the focus error signal, in the case in which the illumination position of the light spot has moved radially in the inside direction of the disc, in a data replay device according to the fourth embodiment of the present invention;
FIG. 14 is a block diagram showing the construction of a discrimination circuit which discriminates whether the track on which the light spot is presently positioned is a land track or a groove track, in a data replay device according to the fourth embodiment of the present invention;
FIG. 15 is a block diagram showing the construction of the servo controller and system controller of a data recording medium replay device according to a fifth embodiment of the present invention;
FIGS. 16(a)-16(j) are diagrams illustrating the operation of a land/groove discrimination circuit of a data replay device according to the fifth embodiment of the present invention;
FIG. 17 is a block diagram showing the construction of a land/groove discrimination circuit of a data replay device according to the fifth embodiment example of the present invention;
FIG. 18 is a schematic view showing the construction of a known compact disc ("CD").

### DESCRIPTION OF THE PREFERRED EMBODIMENTS

Reference will now made in detail to the present preferred embodiments of the present invention, examples of which are illustrated in the accompanying drawings, wherein like reference numerals refer to the like elements throughout. The embodiments are described below in order to explain the present invention by referring to the figures.

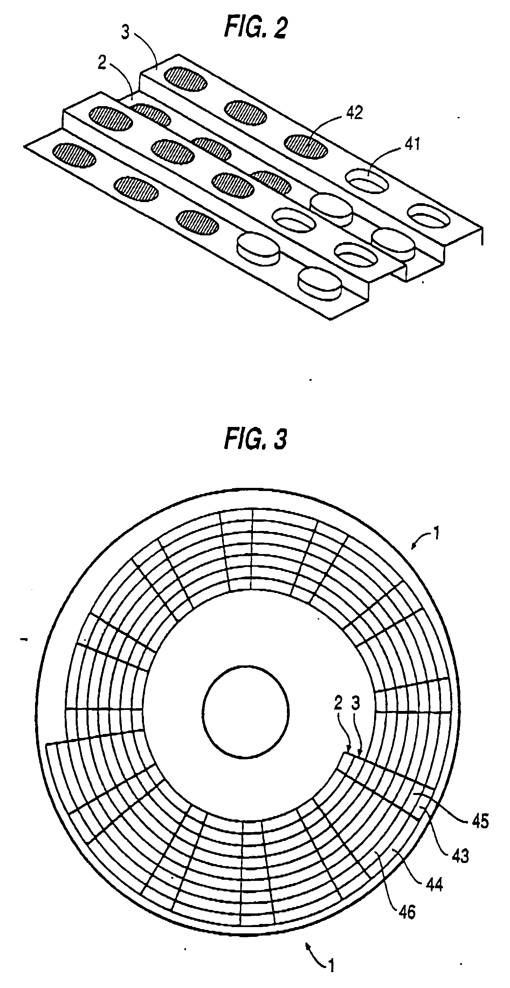

FIG. 2 is a diagram showing the track structure of a data recording medium used in a data playback device according to one embodiment of the present invention.

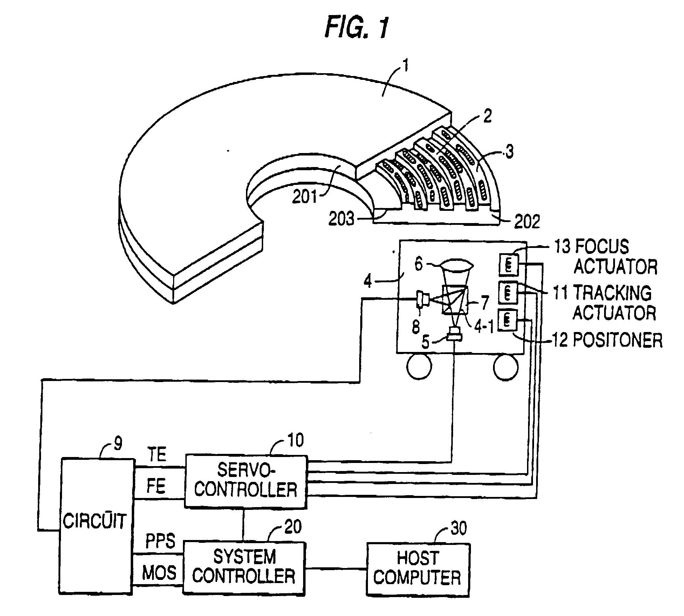

FIG. 2 shows the construction of record tracks of a disc-form recording medium. In a disc-form recording medium 1 (see FIG. 1), there are land tracks 2 and groove tracks 3, which have a difference in respective level Which amounts to about 1/7 λ. Moreover, λ is the wavelength of the light beam which shines on these tracks for replay.

In respective tracks, there are regions where data is recorded by means of phase pits 41, and regions where data is recorded by means of magneto-optical pits 42. Address data is recorded in the regions in which data is recorded by means of phase pits 41, and data which comprises the intended record (data which the user uses) is recorded in the regions in which data is recorded by means of magneto-optical pits 42.

FIG. 3 is a diagram showing a disc-form data recording medium used in a data replay device according to the first embodiment of the present invention.

Land tracks 2 and groove tracks 3 are altemately formed in the radial direction, in the recording surface of the disc-form recording medium 1. The respective tracks are formed in a spiral form. Namely, land and groove tracks are formed in a double spiral track. Moreover, the land tracks and groove tracks may also be formed in concentric circles, alternating in the radial direction.

In the case of tracks of a spiral form, the land tracks 2 and groove tracks 3, respectively, are formed from the innermost peripheral side to the outermost circumference as one continuous track, but one track circumference will be considered as one track.

As shown in FIG. 3, each track contains both address portions 43, 45 and data record portions 44, 46. A set of successive address portions and data record portions is called a sector (for example, the set of address portion 43 and data record portion 44). There are a plurality of sectors in a single track. The sectors are arrayed successively in the track direction. Address data is recorded by means of phase pits in the address portions 43, 45 of a track. Moreover, data for user use is recorded by means of magneto-optical pits in the data record portions 44, 46.

A track address and a sector address are recorded in the address portions 43, 45 of each sector. The track addresses are, for example, an increasing series in succession from the innermost periphery. Moreover, the same track address is recorded in each sector of one track (one track circumference).

In the present embodiment, odd numbered addresses are recorded in the land tracks 2, and even numbered addresses are recorded in the groove tracks 3.

For example, the track address of the innermost periphery track (land track) is made "1", and the track to the outside of it (a groove track) is given the track address "2". Thereafter, moving towards the outer perimeter, the track addresses are set as "3", "4", "5" ... .

If each track is given an address in this manner, the odd numbered tracks are land tracks, and the even numbered tracks are groove tracks.

The difference in level of the land tracks and the groove tracks is set at a value which is effective in suppressing the readout of adjacent tracks. This value is more or less different for a CD, an magneto-optical disc, a phase change disc and the like, but is roughly of the order of 1/7 λ (of the order of 1/7 of the wavelength of the illuminating light beam). Namely, in the case that a wavelength of the illuminating beam of 830 nm is used with a transparent substrate of refractive index 1.5, a difference in the level of 80 nm is preferable. That is, if the illuminating beam is at a wavelength of 830 nm, it would be assumed that the proper difference level is about 120 nm. But, since the recording surface is covered by the protective layer 202 (see Fig. 1) that has a refractive index of 1.5, the proper physical difference level is found by solving the following equation for x. 120 = 1.5x, so x = 80 nm. 80 nm is the preferable difference level.

The nature of the recording pits is set at a value which is effective to suppress readout of adjacent tracks. This value is different according to the kind of CD, magneto-optical disc, phase change disc, etc.

For example, in a CD the phase difference is preferably made 1/4 of a wavelength. Moreover, in an magneto-optical disc, the complex Kerr rotation angle is preferably made _{χ}k = 0°. Namely, in an magneto-optical disc, the recording pits may be magnetic pits of Kerr rotation angle θk = 1°, complex Kerr rotation angle _{χ}k = 0°.

As shown in FIG. 2, in this embodiment, the land tracks and the groove tracks have the same width in the radial direction. The track pitch is set such that when a replay beam shines in the center of a land track, this replay beam does not reach the adjacent land track.

In this manner, when a replay beam shines in the center of a groove track, the replay beam does not illuminate the adjacent groove track.

Currently, it does not matter if a replay beam which has illuminated a land track shines on the adjacent groove track, or if a replay beam which has illuminated a groove track shines on the adjacent land track.

Namely, in the case of a wavelength of the illuminating beam of 830 nm, and a numerical aperture NA of the objective lens of the light beam is NA = 0-55, the track pitch from a land track to the adjacent groove track may be 800 nm.

FIG. 1 is a diagram showing a record/replay device according to the first embodiment of the present invention. The disc-form recording medium 1 is rotated at, e.g., 1800 rpm by means of a spindle motor (not shown in the drawing).

There are land tracks 2 and groove tracks 3 in the disc-shaped recording medium 1. The difference in level between the land and groove tracks is about 1/7 λ (λ is the wavelength of the illuminating light beam). A reflective layer of metal (aluminum or the like) is formed on the surface 203 of the substrate 201.

Moreover, the tracks which have a convex appearance from the illuminating direction of the light beam are termed "land tracks", and the tracks which have a concave appearance are termed "groove tracks".

The disc-shaped substrate 1 is an magneto-optical disc. Data is recorded in the land tracks 2 and groove tracks 3 by means of magneto-optical pits and phase pits. A protective layer 202 which covers the recording surface on which data is recorded is formed of a macromolecular material, such as poly-carbonate.

The light beam 4-1 in order to replay the data recorded in the substrate 1 is formed as follows. The light beam 4-1 is a light beam that is emitted from a semiconductor laser 5, passes through a beam splitter 7, is converged by an objective lens 6 as part of optical head 4, and is formed into a light spot on the track surface of the recording medium 1. Light reflected at the track surface again passes through the objective lens 6, is reflected by the beam splitter 7, and is incident on a detector 8 (photoelectric converter, for example, a photodiode).

The electrical signal into which the reflected light is converted by the detector 8 is input to an electrical circuit 9. The electrical circuit 9 processes the electrical signal from the detector 8, and outputs a track error signal (TE), a focus error signal (FE), a phase pit signal (PPS), and an magneto-optical signal (MOS).

The track error signal TE is a signal that shows the amount of displacement from the center line of the track, in the radial direction, of the light spot formed on the track of the disc-shaped recording medium 1. The focus error signal FE is a signal which shows the amount of displacement of the convergence position of the light beam from the track surface. The phase pit signal PPS is a replay signal of data which was recorded by means of phase pits on the track. The magneto-optical signal MOS is a replay signal of data which was recorded by means of magneto-optical pits on the track.

The track error signal TE and the focus error signal FE are signals that are input to a servo-controller 10 and are processed, being converted into a tracking signal, a position signal, and a focus signal.

The tracking signal is a signal that drives a tracking actuator 11. The tracking signal has a level according to the level (amount of displacement of the light spot in the radial direction from the center line of the track) of the track error signal TE. The tracking actuator 11 moves the objective lens 6 in the radial direction of the recording medium 1 by an amount corresponding to the level of the tracking signal, and sets the position of the light spot in the center of the track.

The position signal is a signal in order to drive a positioner 12. The positioner 12 moves the optical head 4 in a radial direction of the recording medium 1, according to the level of the positioning signal.

The focus signal is a signal in order to drive a focus actuator 13. The focus signal is a signal whose level complies with the level of the focus error signal FE (the amount of displacement of the convergence point of the light beam from the track surface). The focus actuator 13 moves the objective lens 6 in a direction perpendicular to the recording surface of the recording medium 1 by an amount corresponding to the level of the focus signal. The light spot is brought to a focus on the track surface by this means.

On the other hand, the phase pit signal PPS and the magneto-optical signal MOS are input to a system controller 20. These signals are output, as the data which has been read out from the recording medium 1, to the host computer 30. The system controller 20 performs communication with the host computer 30, and according to commands from the host computer 30, sends the data which has been read out to the host computer 30.

Furthermore, the system controller 20 creates control signals based on the phase pit signal PPS and the magneto-optical signal MOS and sends them to the servo-controller 10.

### Embodiment 1

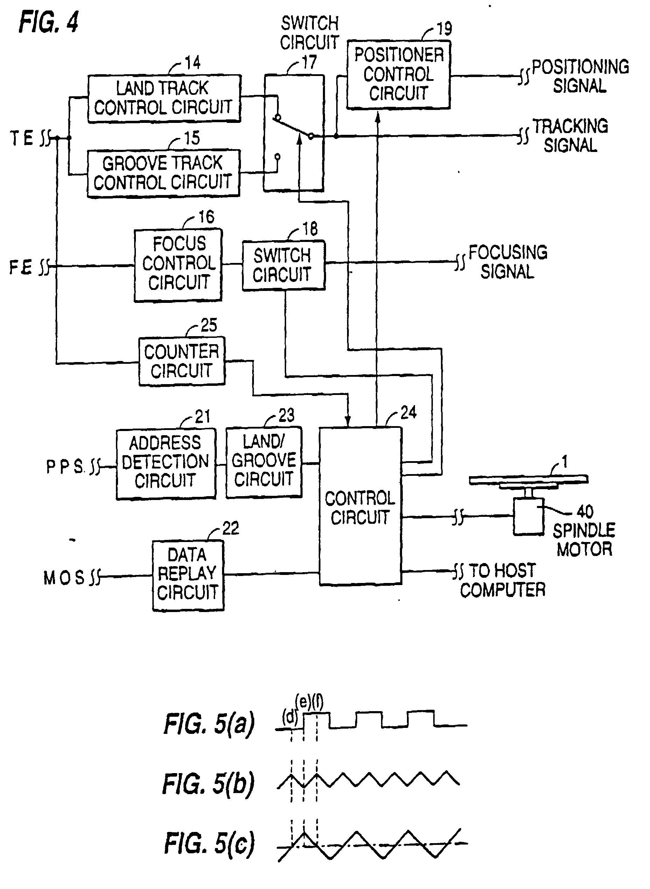

FIG. 4 is a diagram of the servo-controller 10 and system controller 20 of FIG. 1, according to a first embodiment of the present invention. The servo-controller 10 is made from the land track control circuit 14, groove track control circuit 15, focus control circuit 16, switch circuits 17, 18, and positioner control circuit 19 of FIG. 4. Moreover, the system controller 20 is constructed from the address detection circuit 21, the data replay circuit 22, the land/groove decision circuit 23, and the control circuit 24 of FIG. 4.

The track error signal TE is input to the land track control circuit 14 and the groove track control circuit 15. For the respective control circuits, the output signals at the same control constant are of opposite polarity.

The switch circuit 17 inputs output signals from the land track control circuit 14 and the groove track control circuit 15. Then, by means of signals from the system controller 20, one of the two input signals is selectively output. The output signal from the switch circuit 17 is output to the tracking actuator 11 as a tracking signal.

A portion of the tracking signal from the switch circuit 17 is output as a positioning signal to the positioner 12 via the positioner control circuit 19.

The focus error signal controls the focus actuator via the focus control circuit 16 and the switch circuit 18. The switch circuit 18 is controlled to open circuit and closed circuit by means of a signal from the system controller 20 which, namely, controls whether or not there is an output from the switch circuit 18. A signal output from the switch circuit 18 is output to the focus actuator 13 as a focusing signal.

The phase pit signal (PPS) is input to the address detection circuit 21. The signal showing address data (address signal) is detected from within the phase pit signal by the address detection circuit 21.

The address signal which is output from the address detection circuit 21 is sent to the land/groove decision circuit 23. It is then decided in the land/groove decision circuit 23 whether the position of the head 6 (namely, the position on which the light spot is shining) is on a land track or on a groove track. The magneto-optical signal (MOS) is output to the data replay circuit 22. The magneto-optical signal MOS is then taken as replay data by the data replay circuit 22. The decision signal from the land/groove decision circuit 23, and the replay data output from the data replay circuit 22, are input to the control circuit 24. The control circuit 24 controls the switch 17, based on the decision signal. Moreover, it sends the replay data to the host computer 30.

FIGS. 5(a)-5(c) are diagrams showing changes of the tracking signal. FIG. 5(a) shows the time changes of the tracking signal detected when the optical head 4 is caused to move in the radial direction from the inner peripheral side to the outer peripheral side.

In FIG. 5(a), the portion denoted by the symbol d is when the light spot is passing over a land track. The portion denoted by the symbol e is when the light spot is passing over the boundary of a land track and a groove track. The portion denoted by the symbol f is when the light spot is passing over a groove track.

FIG. 5(b) shows the changes of the reflectance. The proportion of the amount of light received by the detector 8, with respect to the illuminated light, is taken as the reflectance. In comparison with the state when the light spot is passing over a land track, the reflectance falls when the light spot is passing over a boundary between a land track and a groove track.

FIG. 5(c) shows the waveform of the tracking signal when a push-pull method is used in tracking error detection. The slope of the change is positive according to the time course of the tracking signal level when the light spot is passing over a land track. Namely, the level increases monotonically. Moreover, the slope of the change is negative according to the time course of the tracking signal level when the light spot is passing over a groove track.

As can be understood from FIGS. 5(a)-5(c), the polarity of the tracking signal becomes reversed both when the light spot is passing over a land track and when it is passing over a groove track. The tracking signals output from the land track control circuit 14 and the groove track control circuit 15 are signals for controlling the tracking actuator such that the level of the tracking error signal becomes 0. If the polarity of the tracking signal is reversed when the light spot is on a land track and when it is on a groove track, because the polarity of the tracking signal is reversed, tracking control on the respective track is performed well. Accordingly, in this embodiment example, the polarity of both the output of the land track control circuit 14 and the output of the groove track control circuit 15 is reversed.

Next, the operation of the data record medium replay device of this embodiment example will be described.

Firstly, a recording medium is inserted into the data record medium replay device. The control circuit 24, by sending a control signal to a spindle motor 40 (shown in FIG. 4) begins the rotation of the spindle motor 40, and rotates the recording medium 1 which is located on a turntable. The replay device detects whether or not the inserted recording medium is a land/groove recording medium.

This detection can be performed as follows.

The data recording medium 1 is received on the turntable driven by the spindle motor 40 in a casing (not shown). A sensor hole is disposed in a portion of the casing. When a recording medium is inserted, the replay device detects the sensor hole of the casing. The replay device can recognize, when the sensor hole is detected, that the inserted recording medium is a land/groove recording medium.

Alternatively, a mark showing that it is a land/groove recording medium may be present on the recording surface of the data recording medium. For example, generally in the recording surface of an magneto-optical disc, there is a so-called PEP (phase encoded portion) region. Here, various data relating to the medium are recorded, and data showing that it is a land/groove recording medium may be recorded in this region. Moreover, data may be recorded in other predetermined tracks of predetermined regions, to show that it is a land/groove recording medium.

The replay device causes rotation of the data recording medium at a predetermined rpm by means of the spindle motor 40 when the recording medium is inserted. Next, the replay device drives the focus actuator 13 of the optical head 4 and performs pull-in control of the focus with respect to an optional track on the recording medium. This pull-in control of the focus is performed by the output of control signals by the control circuit 24 in the system controller 20, by means of the switch circuit 18 becoming closed. When the switch circuit 18 is in the closed state, the focusing signals from the switch circuit 18 are output to the focus actuator 13. Then, by the operation of the focus actuator 13, the light spot is caused to focus on the track surface.

When performing this kind of focus pull-in control, the switch 17 is set open. Namely, the tracking signals are not output to the tracking actuator 11 from either the land track control circuit 14 or the groove track control circuit 15. In this state, the state is one in which the tracking servo loop is open (servo OFF).

Next, the address data recorded on the focused track is read out. The address data is recorded in the address portion (43 or 45) of each sector of the tracks of FIG. 3. At this time, it is not known whether the focused track is a land track or a groove track. Accordingly, the address detected by the address detection circuit 21, decided by the land/groove decision circuit 23, is determined to be either a land track or a groove track on which the light spot is present. In this embodiment, the address detected is determined to be a land track if the address is an odd number, or a groove track if the address is an even number. According to this decision signal, the control circuit 24 closes the switch circuit 17 to the land track control circuit 14 side if the address read out is one of a land track. If the address is that of a groove track, control circuit 24 closes the switch circuit 17 to the groove track control circuit 15 side.

As a result, a tracking signal which corresponds to the track at which the light spot is positioned is output to the tracking actuator 11, and tracking control is commenced. The light spot can then continue to follow the focused track (land track or groove track).

Moreover, as mentioned above, the tracking servo is initially OFF. In the case of an address which is to be read, because the tracking signal is not output, the absolute position of the light spot does not change. However, because the tracks of the disc 1 have an eccentricity, the relative position of the light spot and the track of the disc 1 displaces in the radial direction due to the rotation of the disc 1. Accordingly, the light spot does not continue to illuminate the same track. Nevertheless, the length in the track direction of one address record region on the disc 1 is not very long. Even if the light spot crosses the track, if the light spot shines on the same track just for the period to read out an address record region, the address of this track can be read out.

For example, when the address which was read out was that of a land track, the tracking conditions are set corresponding to a land track. Pull-in control of tracking is then performed with respect to a land track. This control, by means of control signals which are output from the control circuit 24 within the system controller 20, is performed such that the output from the switch circuit 17 is selected. The control circuit 24 outputs a control signal in order to cause the output from the switch circuit 17 as a tracking signal output from the land track control circuit 14. As a result, a tracking signal of appropriate polarity for the tracking control of land tracks is output from the switch control circuit 17. This tracking signal is sent to the tracking actuator 11, and the tracking actuator 11 performs pull-in control with respect to land tracking. After this, the light spot continues to follow the land track.

By means of the above operations, the light spot is under tracking control and focus control with respect to a certain land track. The light spot then continues to follow this land track, and continues to be subject to focus control on the surface of this land track.

In a state in which the light spot follows the land track, an instruction is awaited from the host computer 30, which is located outside the replay device. An instruction is then received from the host computer 30 to read out data of a certain sector. This instruction is input to the control circuit 24 within the system controller 20. The control circuit 24 determines whether the sector which received the readout instruction is present in a land track or is present in a groove track.

The control circuit 24 then finds the relative difference of the present head position (present track) and the position of the sector which received the readout instruction (target track).

The control circuit 24 makes the tracking servo loop an open loop (servo OFF). This control sets switch circuit 17 to open, and may be such that the tracking signal is not output from the switch circuit 17.

The control circuit 24 next performs control which causes the optical head 4 to move in the direction of a target track, by means of sending a control signal to the positioner control circuit 19.

During the movement of the optical head 4, the track error signal as shown in FIG. 5(a) is output. A counter circuit 25 counts the pulse number of this track error signal. This count value is input to the control circuit 24. The number of tracks which the optical head crosses is known from this count value. Then, when the exact number of tracks have been crossed up to the target track (when the position of the light spot just comes above the target track), the movement of the optical head 4 is stopped, and the tracking servo is set to closed loop (servo ON). The stopping of the movement of the optical head 4 is performed by the control circuit 24 sending a control signal to the positioner control circuit 19. Setting of the tracking servo to a closed loop is performed by the control circuit 24 controlling the switch circuit 17. At this time, if the target track is a land track, a tracking signal of suitable polarity for tracking control of a land track is output from the switch circuit 17. Namely, the switch circuit 17 connects to the output side of the land track control circuit 14. If the target track is a groove track, a tracking signal of suitable polarity for tracking control of a groove track is output. Namely, the switch circuit 17 connects to the output side of the groove track control circuit 15. The target track is now considered to be a groove track.

The replay device replays the data from the track which the light spot followed due to the tracking control, and detects the track address.

The control circuit 24 confirms that the detected track address is a groove track address, and also that the sector which received the readout instruction is that in which the track is present.

If the detected track address is different from the target track address, the control circuit 24 again finds the relative difference of the present head position (present track) and the position of the sector which received the readout instruction (target track). The above-described operations are repeated.

Then, bringing about agreement of the present track address and the address of the track present in the sector which received the readout instruction, the replay device replays the data of the sector which received the readout instruction, and transfers the data which was read out to the external host computer. This operation is performed by means of the control circuit 24 transferring to the host computer 30 the replay data from the data replay circuit 22.

After this, the replay device again waits for an instruction from the host computer.

### Embodiment 2

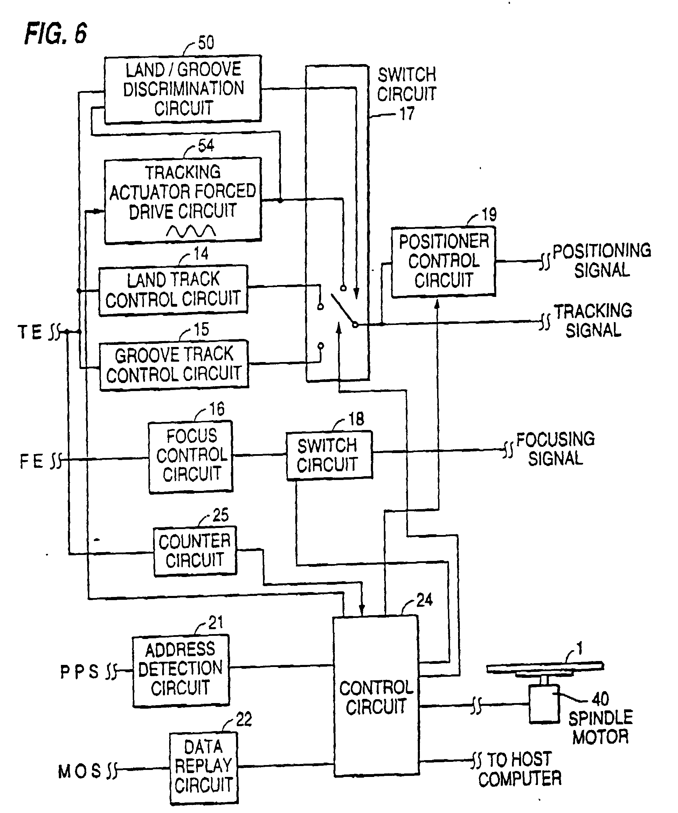

FIG. 6 is a diagram of the servo controller 10 and system controller 20 of FIG. 1, according to a second embodiment of the present invention.

The servo controller 10 is constructed, as shown in FIG. 6, from the land track control circuit 14, the groove track control circuit 15, the focus control circuit 16, the switch circuits 17, 18, the positioner control circuit 19, the land/groove discrimination circuit 50, and the tracking actuator forced drive circuit 54. Moreover, the system controller 20 is constructed, as shown in FIG. 6, from the address detection circuit 21, the data replay circuit 22, and the control circuit 24.

The land track control circuit 14, the groove track control circuit 15, the focus control circuit 16, the switch circuit 18, and the positioner control circuit 19 are similar in operation to those of the first embodiment (FIG. 4), and their description is therefore omitted here.

The switch circuit 17 has input thereto output signals from the land track control circuit 14 and the groove track control circuit 15. Then, by means of a signal from the system controller 20, a selected one signal from the two input signals is output. The output signal from the switch circuit 17 is output as a tracking signal to the tracking actuator 11.

A portion of the tracking signal from the switch circuit 17 is output as a positioning signal to the positioner 12, via the positioner control circuit 19.

An address signal output from the address detection circuit 21 is sent to the control circuit 24. An magneto-optical signal (MOS) is input to the data replay circuit 22. The magneto-optical signal MOS is then considered as replay data by the data replay circuit 22. The address signal output from the address detection circuit 21, and the replay data output from the data replay circuit 22, are input to the control circuit 24, The control circuit 24 controls the switch 17 based on the decision signal. Moreover, the replay data is sent to the host computer 30.

In the present embodiment, similar to the first embodiment, the polarities are reversed of the output of the land track control circuit 14 and the output of the groove track control circuit 15.

The operation of the data replay device of the present embodiment example will next be described.

First, a recording medium is inserted into the data record medium replay device. The control circuit 24, by sending a control signal to a spindle motor 40 (shown in FIG. 6) begins the rotation of the spindle motor 40, and rotates the recording medium which is located on a turntable. The replay device detects whether or not the inserted recording medium is a land/groove recording medium.

This detection can be performed similar to that in the first embodiment.

The replay device causes rotation of the data recording medium at a predetermined rpm by means of the spindle motor 40 when the recording medium is inserted. Next, the replay device drives the focus actuator 13 of the optical head 4 and performs pull-in control of the focus with respect to an optional track on the recording medium. This pull-in control of the focus is performed by the output of control signals by the control circuit 24 in the system controller 20, by means of the switch circuit 18 becoming closed. When the switch circuit 18 enters its closed state, the focusing signals from the switch circuit 18 are output to the focus actuator 13. Then, by the operation of the focus actuator 13, the light spot is caused to focus on the track surface.

When performing this kind of focus pull-in control, the switch 17 is set open. Namely, the tracking signals are not output to the tracking actuator 11 from any of the land track control circuit 14, the groove track control circuit 15, or the tracking actuator forced drive circuit 54. In this state, the tracking servo loop is open (servo OFF).

When performing the focus pull-in control and focusing the light beam, the control circuit 24 controls the switch circuit 17 to close to the side of the tracking actuator forced drive circuit 54. As a result, the signals from the tracking actuator forced drive circuit 54 are output to the tracking actuator 11. The tracking actuator 11 operates based on the signals from the tracking actuator forced drive circuit 54.

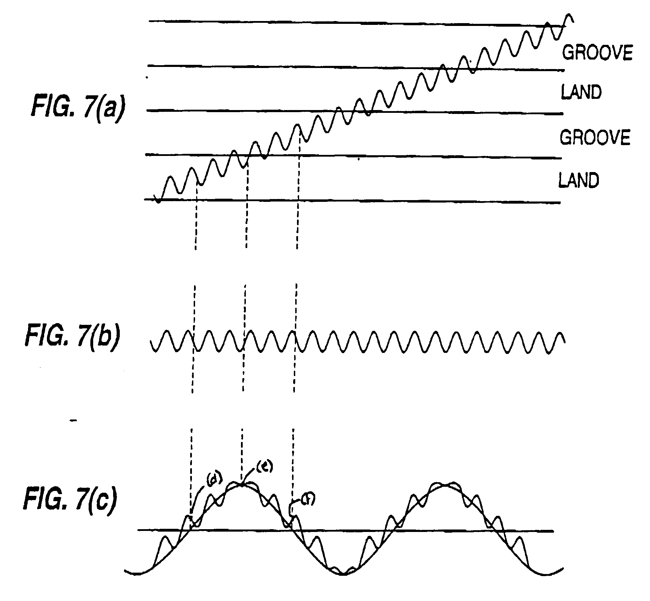

FIGS. 7(a)-7(c) are diagrams illustrating the method of discrimination, from the change in the polarity of the tracking error signal, whether the track illuminated by the light beam is a land track or a groove track.

FIG. 7(b) shows the drive current of the tracking actuator 11 which is an output signal from the actuator forced drive circuit 54.

FIG. 7(a) is a diagram showing the change of illumination position of the light beam accompanying the passage of time. In this case, because the tracking servo is set OFF, the absolute position of the light beam only vibrates in the radial direction, based on the output signal of the actuator forced drive circuit 54. However, because the tracks of the disc 1 have eccentricity, the relative position of the light beam and the tracks of the disc 1 displace in a radial direction. Accordingly, as shown in FIG. 7(a), the illumination position of the light beam does not continue to shine on the same track, but gradually displaces to an adjacent track.

FIG. 7(c) shows the waveform of the tracking error signal when the push-pull method has been used in tracking error detection. This waveform is one in which the waveform shown in FIG. 7(b), which is the vibration of the light beam illumination position due to the drive current, is superimposed on the sine wave waveform due to the illumination position of the light beam crossing a track.

In FIG. 7(a), when the light beam is in motion on a land track, and when the drive current shown in FIG. 7(b) is decreasing, the level of the tracking error signal shown in FIG. 7(c) also decreases. Moreover, in FIG. 7(a), when the light beam is in motion on a groove track, and when the drive current shown in FIG. 7(b) is decreasing, the level of the tracking error signal shown in FIG. 7(c) increases. Moreover, as shown in FIG. 7(c), when the light beam is in motion on the boundary of a land track and a groove track, the level of the tracking error signal does not change.

It can be understood from the above that, when the light beam is illuminating a land track, as compared to when it is illuminating a groove track, the change of the drive signal of the tracking actuator 11 and the change of the level of the tracking error signal become reversed in polarity. Accordingly, it can be discriminated from this relationship whether the track illuminated by the light beam is a land track or a groove track.

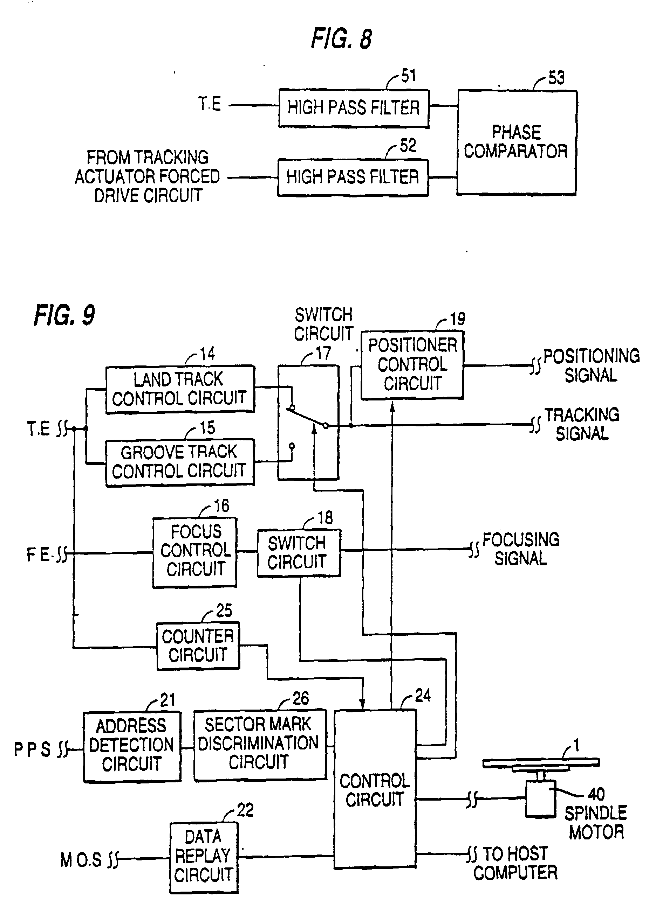

FIG. 8 is a diagram that illustrates the construction of a land/groove discrimination circuit 50 (FIG. 6). In FIG. 8, the tracking error signal (the signal of FIG. 7(c)) is input to a high pass filter 51, and the signal from the actuator forced drive circuit 54 (signal of FIG. 7(b)) is input to a high pass filter 52. The respective high pass filters have outputs from which the low frequency signals which are unnecessary for the discrimination have been removed from the input signals. The output signals from the high pass filters 51 and 52 are input to a phase comparator 53. The phase comparator 53 outputs a signal showing a positive value when the two input signals are of the same phase, and outputs a signal showing a negative value when the two inputs signals are of opposite phase. Accordingly, in this embodiment, when a signal showing a positive value is output from the land/groove discrimination circuit 50, the illumination position of the light beam is on a land track, and when a signal showing a negative value is output, it is on a groove track.

As mentioned above, according to the discrimination signal from the land/groove discrimination circuit 50, the switch circuit 17, from the actuator forced drive circuit 54 side, is closed to the land track control circuit 14 side or to the groove track control circuit 15 side. When the signal output from the land/groove discrimination circuit 50 shows a positive value, it is closed to the land track control circuit 14 side, and when the output signal shows a negative value, it is closed to the groove track control circuit 15 side.

As a result, tracking control is commenced, a tracking signal being output to the tracking actuator 11 according to the track where the light spot is positioned. The light spot then continues to follow the focused track (land track or groove track).

For example, when the discrimination signal from the land/groove discrimination circuit 50 was one which showed a land track, the tracking conditions are set to conditions corresponding to a land track. Push-pull control is then performed with respect to the land track.

This control is performed by the connection of the switch circuit 17 to the land track control circuit 14 side. As a result, tracking signals are output from the switch circuit 17, of a polarity suitable for tracking control of a land track. This tracking signal is sent to the tracking actuator 11, and the tracking actuator 11 performs push-pull control of tracking with respect to the land track. Thereafter, the light spot continues to follow the land track.

By means of the above operation, the light spot is subject to tracking control and focus control with respect to a certain land track. The light spot then continues to follow this land track, and continues to be subject to focus control on the track surface.

In such a state in which the light spot follows the land track, an instruction is awaited from the host computer 30 located outside the replay device. An instruction is then received from the host computer 30 to read out data of a predetermined sector. This instruction is input to the control circuit 24 within the system controller 20. The control circuit 24 determines whether a land track is present or a groove track is present in the sector for which the readout instruction was received.

The control circuit 24 then finds the difference of the relative positions of the present head position (present track) and the position of the sector which has received a readout instruction (target track).

The control circuit 24 sets the tracking servo loop to open loop (servo OFF). This control, taking switch circuit 17 as open, may be such that no tracking signals are output from the switch circuit 17.

The control circuit 24 next performs control to cause the optical head 4 to move in the direction of the target track, by sending a control signal to the positioner control circuit 19.

During the movement of the optical head 4, a tracking signal is output as shown in FIG. 5(a). A counter circuit 25 counts the number of pulses of this tracking signal. This count value is input to the control circuit 24. The number of tracks which the light spot crosses is known from this track number. When the exact number of tracks to the target track have been crossed (the position of the light spot has come to be just above the target track), the movement of the optical head 4 is stopped, and the tracking servo is set to closed loop (servo ON). The control circuit 24 performs stopping of the optical head 4 by means of sending a control signal to the positioner control circuit 19. Setting of the tracking servo to a closed loop is performed by the control circuit 24 controlling the switch circuit 17. At this time, if the target track is a land track, a tracking signal of suitable polarity for tracking control of a land track is output from the switch circuit 17. Namely, the switch circuit 17 connects to the output side of the land track control circuit 14. If the target track is a groove track, a tracking signal of suitable polarity for tracking control of a groove track is output. Namely, the switch circuit 17 connects to the output side of the groove track control circuit 15. The target track is now considered to be a groove track.

The replay device replays the data from the track which the light spot followed due to the tracking control, and detects the track address.

The control circuit 24 confirms that the detected track address Is a groove track address, and also that the sector which received the readout instruction is that in which the track is present.

If the detected track address is different from the target track address, the control circuit 24 again finds the relative difference of the present head position (present track) and the position of the sector which received the readout instruction (target track). The above-described operations are repeated.

Then, bringing about agreement of the present track address and the address of the track present in the sector which received the readout instruction, the replay device replays the data of the sector which received the readout instruction, and transfers the data which was read out to the external host computer 30. This operation is performed by means of the control circuit 24 transferring to the host computer 30 the replay data from the data replay circuit 22.

After this, the replay device again waits for an instruction from the host computer.

### Embodiment 3

FIG. 9 is a diagram of the servo controller 10 and system controller 20 of FIG. 1, according to a third embodiment of the present invention.

The servo controller 10 includes a land track control circuit 14, a groove track control circuit 15, a focus control circuit 16, switch circuits 17, 18, and a positioner control circuit 19. Moreover, the system controller 20 includes an address detection circuit 21, a data replay circuit 22, a sector mark discrimination circuit 26, and a control circuit 24.

The land track control circuit 14, the groove track control circuit 15, the focus control circuit 16, the switch circuits 17, 18, and the positioner control circuit 19 are similar in operation to those of the first embodiment shown in FIG. 4, and their description is therefore omitted here.

A phase pit signal (PPS) is input to the address detection circuit 21. A signal showing address data (the "address signal") is detected from within the phase pit signal by the address detection circuit 21. Replay signals of segments recorded in the address portions 43 or 45 (see FIG. 3) of the sector format of the magneto-optical disc 1 are also contained in this address signal.

Address signals output from the address detection circuit 21 are input to a sector mark discrimination circuit 26. Replay signals of sector marks within the address signal are extracted by the sector mark discrimination circuit 26, and this sector mark discriminates whether it is a land track or a groove track.

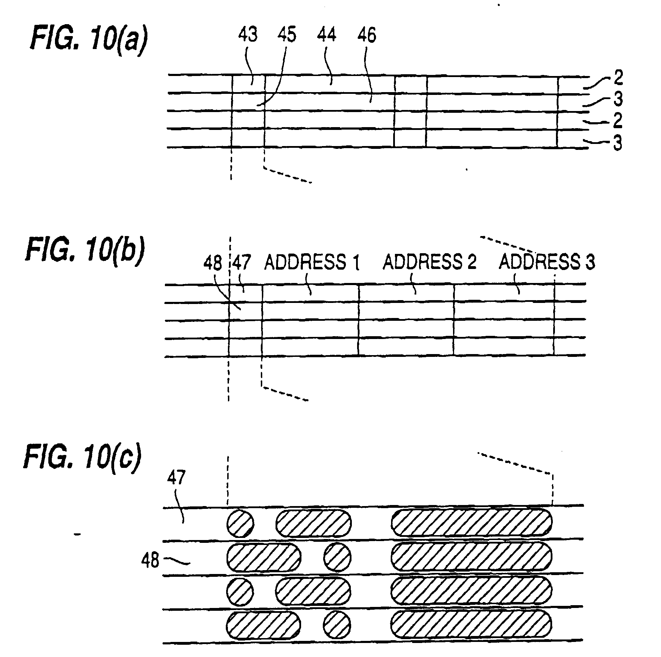

FIGS. 10(a)-10(c) are diagrams showing a disc having sector marks which differ for land tracks and groove tracks, as used in the present embodiment. FIG. 10(a) shows the sector format of a track which has been formed in a disc 1. In FIG. 10(a), land tracks 2 and groove tracks 3 are alternately parallel in a radial direction. Then each track is divided into plural sectors. Each sector comprises address portions 43, 45 and data recording portions 44, 46.

FIG. 10(b) is an enlarged drawing of the address portion of FIG. 10(a). A sector mark 47, 48 is recorded in the front portion of the address portion of each track. Address data is then recorded, next to the sector marks, with the address data being repeated three times.

FIG. 10(c) is an enlarged drawing of the sector mark portion of FIG. 10(b). The sector marks are formed by means of phase pits (shaded portions). As shown in FIG. 10(c), the sector mark 47 of a land track 2 differs from the sector mark 48 of a groove track 3.

Accordingly, the replay signals formed by reading out the sector marks also necessarily differ according to replay from a land track or replay from a groove track. The sector mark discrimination circuit 26 can discriminate between the replay signals from a land track and the replay signals from a groove track by the sector marks extracted from the replay signals.

Retuming to describing the embodiment shown in FIG. 9, whether the position of the head (namely, the position which the light spot illuminates) is over a land track or over a groove track, is determined by the sector mark discrimination circuit 26. The sector mark discrimination circuit outputs its decision signal. Moreover, magneto-optical signals MOS are input to the data replay circuit 22. The magneto-optical signals MOS are then taken as replay data by the data replay circuit 22. The decision signal output from the sector mark discrimination circuit 26 and the replay data output from the data replay circuit 22 are input to the control circuit 24. The control circuit 24 controls the switch 17 based on the decision signal. Moreover, the replay data is sent to the host computer 30.

The operation of the data recording medium replay device of the present embodiment is described next.

First, a recording medium is inserted into the data record medium replay device. The control circuit 24, by sending a control signal to a spindle motor 40 (shown in FIG. 9) begins the rotation of the spindle motor 40, and rotates the recording medium 1 which is located on a turntable. The replay device detects whether or not the inserted recording medium is a land/groove recording medium.

This detection can be performed similar to that in the first embodiment.

The replay device causes rotation of the data recording medium 1 at a predetermined rpm by means of the spindle motor 40 when the recording medium is inserted. Next, the replay device drives the focus actuator 13 of the optical head 4 and performs pull-in control of the focus with respect to an optional track on the recording medium. This pull-in control of the focus is performed by the output of control signals by the control circuit 24 in the system controller 20, by means of the switch circuit 18 becoming closed. When the switch circuit 18 is in its closed state, the focusing signals from the switch circuit 18 are output to the focus actuator 13. Then, by the operation of the focus actuator 13, the light spot is caused to focus on the track surface.

When performing this kind of focus pull-in control, the switch 17 is set open. Namely, the tracking signals are not output to the tracking actuator 11 from either the land track control circuit 14 or the groove track control circuit 15. In this state, the tracking servo loop is in an open state (servo OFF).

The sector marks recorded on the focused track are next read out. At this time, it is not known whether the focused track is a land track or a groove track. Accordingly, it is determined by the sector mark discrimination circuit 26 whether the track on which the light spot is at present is a land track or a groove track. According to this decision signal, the control circuit 24, if the address read out is one of a land track, closes the switch circuit 17 to the land track control circuit 14 side. If the address read out is of a groove track, the control circuit closes switch circuit 17 to the groove track control circuit 15 side.

As a result, a tracking signal which corresponds to the track at which the light spot is positioned is output to the tracking actuator 11, and tracking control is commenced. The light spot can then continue to follow the focused track (land track or groove track).

Moreover, as mentioned above, the tracking servo initially being OFF, in the case of an address which is to be read, because no tracking signals are output, the absolute position of the light spot does not change. However, because the tracks of the disc 1 have an eccentricity, the relative position of the light spot and the track of the disc 1 displaces in the radial direction due to the rotation of the disc 1. Accordingly, the light spot does not continue to illuminate the same track. Nevertheless, the length in the track direction of one address record region on the disc 1 is not very long. Even if the light spot crosses the track, if the light spot shines on the same track just for the period to read out an address record region, the address of this track can be read out.

For example, when the address which was read out was that of a land track, the tracking conditions are set corresponding to a land track. Pull-in control of tracking is then performed with respect to a land track. This control, by means of control signals which are output from the control circuit 24 within the system controller 20, is performed such that the output from the switch circuit 17 is selected. The control circuit 24 outputs a control signal in order to cause the output from the switch circuit 17 as a tracking signal output from the land track control circuit 14. As a result, a tracking signal of appropriate polarity for the tracking control of land tracks is output from the switch circuit 17. This tracking signal is sent to the tracking actuator 11, and the tracking actuator 11 performs pull-in control with respect to land tracking. After this, the light spot continues to follow the land track.

By means of the above operations, the light spot is under tracking control and focus control with respect to a certain land track. The light spot then continues to follow this land track, and continues under focus control on this land track surface.

In such a state in which the light spot follows the land track, an instruction is awaited from the host computer 30, which is located outside the replay device. An instruction is then received from the host computer to read out data of a certain sector. This instruction is input to the control circuit 24 within the system controller 20. The control circuit 24 determines whether the sector which received the readout instruction is present in a land track or is present in a groove track. The control circuit 24 then finds the relative difference of the present head position (present track) and the position of the sector which received the readout instruction (target track).

The control circuit 24 makes the tracking servo loop an open loop (servo OFF). This control sets switch circuit 17 to open, and may be such that the tracking signal is not output from the switch circuit 17.

The control circuit 24 next performs control which causes the optical head 4 to move in the direction of a target track, by means of sending a control signal to the positioner control circuit 19.

During the movement of the optical head 4, the track error signal as shown in FIG. 5(a) is output. A counter circuit 25 counts the pulse number of this track error signal. This count value is input to the control circuit 24. The number of tracks which the optical head crosses is known from this count value. Then, when the exact number of tracks have been crossed up to the target track (when the position of the light spot just comes above the target track), the movement of the optical head 4 is stopped, and the tracking servo is set to closed loop (servo ON). The stopping of the movement of the optical head 4 is performed by the control circuit 24 sending a control signal to the positioner control circuit 19. Setting of the tracking servo to a closed loop is performed by the control circuit 24 controlling the switch circuit 17. At this time, if the target track is a land track, a tracking signal of suitable polarity for tracking control of a land track is output from the switch circuit 17. Namely, the switch circuit 17 connects to the output side of the land track control circuit 14. If the target track is a groove track, a tracking signal of suitable polarity for tracking control of a groove track is output. Namely, the switch circuit 17 connects to the output side of the groove track control circuit 15. The target track is now considered to be a groove track.

The replay device replays the data from the track which the light spot followed due to the tracking control, and detects the track address. The control circuit 24 confirms that the detected track address is a groove track address, and also that the sector which received the readout instruction is that in which the track is present.

If the detected track address is different from the target track address, the control circuit 24 again finds the relative difference of the present head position (present track) and the position of the sector which received the readout instruction (target track). The above-described operations are repeated.

Then, bringing about agreement of the present track address and the address of the track present in the sector which received the readout instruction, the replay device replays the data of the sector which received the readout instruction, and transfers the data which was read out to the external host computer. This operation is performed by means of the control circuit 24 transferring to the host computer 30 the replay data from the data replay circuit 22.

After this, the replay device again waits for an instruction from the host computer.

### Embodiment 4

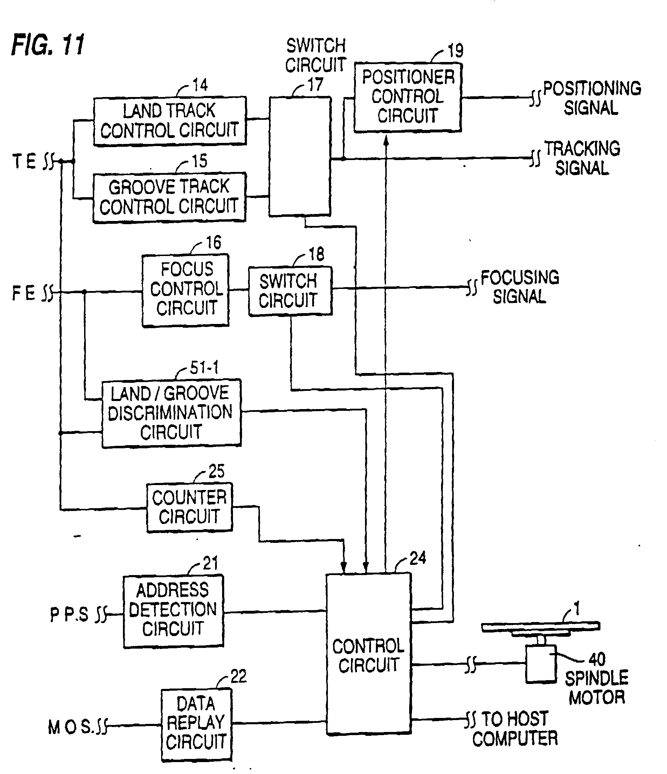

FIG. 11 is a diagram of the servo controller 10 and system controller 20 of FIG. 1, according to a fourth embodiment of the present invention.

The servo controller 10 in FIG. 11 comprises the land track control circuit 14, the groove track control circuit 15, the focus control circuit 16, the switch circuits 17, 18, the positioner control circuit 19, and a land/groove discrimination circuit 51-1. Moreover, the system controller 20 in FIG. 11 comprises the address detection circuit 21, the data replay circuit 22, and the control circuit 24.

The land track control circuit 14, the groove track control circuit 15, the focus control circuit 16, the switch circuits 17, 18, and the positioner control circuit 19 are similar in operation to those of the first embodiment shown in FIG. 4, and their description is therefore omitted here.

A phase pit signal (PPS) is input to the address detection circuit 21. A signal showing address data (address signal) is detected from within the phase pit signal PPS by the address detection circuit 21.

Magneto-optical signals MOS are input to the data replay circuit 22. The magneto-optical signals MOS are then taken as replay data by the data replay circuit 22. The address signal output from the address detection circuit 21, and the replay data output from the data replay circuit 22 are input to the control circuit 24. The control circuit 24 sends to the host computer 30 the replay data from the region of the desired address.

The operation of the data recording medium replay device of the present embodiment is now described.

First, a recording medium is inserted into the data record medium replay device. The control circuit 24, by sending a control signal to a spindle motor 40 (shown in FIG. 11) begins the rotation of the spindle motor 40, and rotates the recording medium 1 which is located on a turntable. The replay device detects whether or not the inserted recording medium is a land/groove recording medium. This detection can be performed similar to that in the first embodiment.

The replay device causes rotation of the data recording medium at a predetermined rpm by means of the spindle motor 40 when the recording medium 1 is inserted. Next, the replay device drives the focus actuator 13 of the optical head 4 and performs pull-in control of the focus with respect to an optional track on the recording medium. This pull-in control of the focus is performed by the output of control signals by the control circuit 24 in the system controller 20, by means of the switch circuit 18 becoming closed. When the switch circuit 18 is in its closed state, the focusing signals from the switch circuit 18 are output to the focus actuator 13. Then, by the operation of the focus actuator 13, the light spot is caused to focus on the track surface.

When performing this kind of focus pull-in control, the switch 17 is set open. Namely, the tracking signals are not output to the tracking actuator 11 from either the land track control circuit 14 or the groove track control circuit 15. In this state, the tracking servo loop is in an open state (servo OFF).

In this case, because no tracking signal is output, the absolute position of the light spot does not change. However, because the tracks of the disc 1 have an eccentricity, the relative position of the light spot and the track of the disc 1 displaces in the radial direction, due to the rotation of the disc 1. Accordingly, the light spot does not continue to illuminate the same track. The position of the light spot relative to the track is moving to the outside, or moving to the inside, according to the rotation of the disc 1.

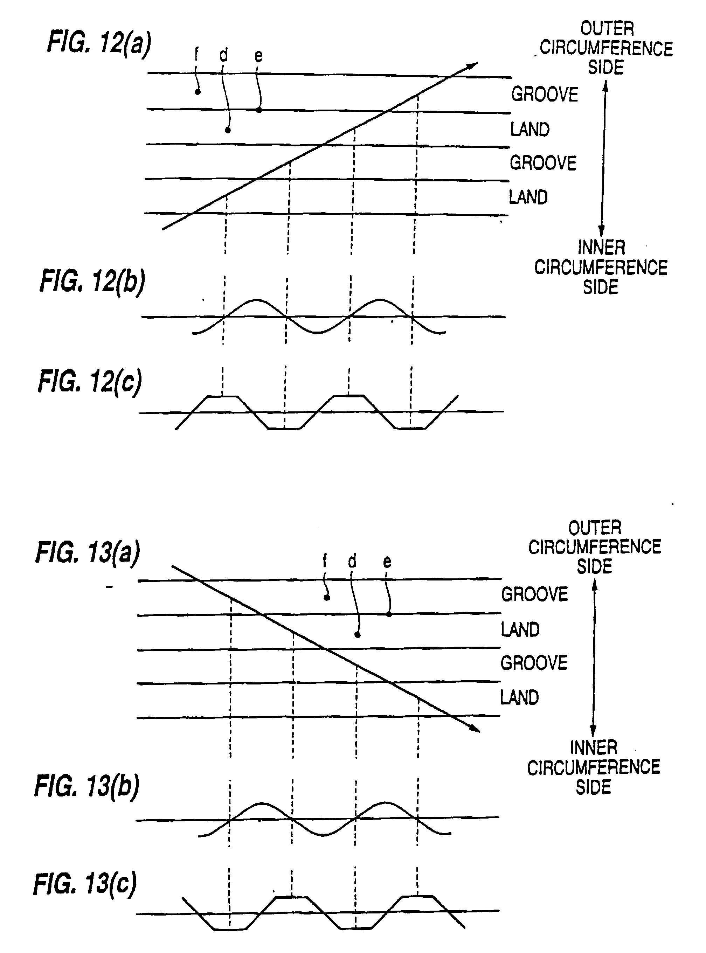

FIGS. 12(a)-12(c) are diagrams showing the change of the track error signal and the change of offset of the focus error signal, in the case in which the illumination position of the light spot has moved relative to the disc 1 in the outside direction of the disc 1. FIG. 12(a) is a diagram of the movement locus of the light spot on a track. The portion denoted by the symbol d is a land track, the portion denoted by the symbol e is the boundary of a land track and a groove track, and the portion denoted by the symbol f is a groove track.

FIG. 12(c) shows the offset of the focus error signal. It is the difference in level, in the illuminating direction of the light beam, for a land track and a groove track. Accordingly, an offset arises, in the focus error signal in a respective track, according to the difference of level of the tracks. When the light spot is in a land track (when the track surface is close to the optical head 4), an offset arises to the positive polarity side, and when the light spot is in a groove track (when the track surface is remote from the optical head 4), an offset of negative polarity arises.

FIG. 12(b) shows the waveform of the track error signal. The track error signal becomes 0 V when the light spot is directly above a land track or a groove track (when the center of the light spot is in the center of a track, in the radial direction). The point at which the track error signal becomes 0 V is termed the zero crossing point. As can be seen from FIGS. 12(a)-12(c), when the polarity of the offset of the focus error signal is positive at the zero crossing point, the light spot is over a land track, and when the polarity of the offset of the focus error signal is negative at the zero crossing point, the light spot is over a groove track.

FIGS. 13(a)-13(c) are diagrams illustrating the change of the track error signal and the change of offset of the focus error signal in the case in which the illumination position of the light spot has moved relative to the disc 1 to the inside direction of the disc 1. FIG. 13(a) is a diagram of the movement locus of the light spot on a track. The symbols d, e and f are similar to those in FIG. 12(a).

FIG. 13(c) shows the offset of the focus error signal. Similar to the case of FIG. 12, when the light spot is in a land track, an offset arises to the positive polarity side. When the light spot is in a groove track, an offset arises to the negative polarity side.

FIG. 13(b) shows the waveform of the track error signal. Similar to FIG. 12(b), when the polarity of the offset of the focus error signal is positive at the zero crossing point, the light spot is over a land track, and when the polarity of the offset of the focus error signal is negative at the zero crossing point, the light spot is over a groove track.

From the above, if the polarity of the focus offset is determined when the track error signal is 0 V, whether the light spot is over a land track or over a groove track can be discriminated.

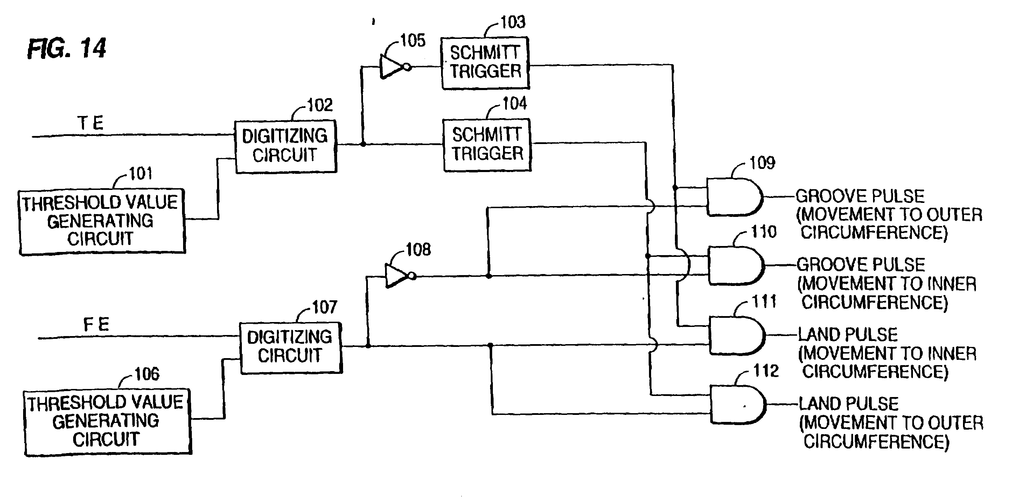

FIG. 14 is a diagram showing the construction of the land/groove discrimination circuit 51-1 (FIG. 11), which discriminates whether the present position of the light spot is on a land track or on a groove track.

In FIG. 14, the track error signal TE is input to a digitizing circuit 102. In the digitizing circuit 102, the track error signal is digitized by comparison of a threshold value level, which is output from a threshold value generating circuit 101, and the track error signal. Moreover, the threshold value level output from the threshold value generating circuit 101 can be changed by setting the threshold value extemally.

A point at which the level of the digitized track error signal output from the digitizing circuit 102 changes from negative to positive, when the light spot moves in an outward direction, is when the light spot is radially central of the land track. When the light spot moves in an inward direction, the change from negative to positive is when the light spot is radially central of a groove track.

In the circuit of FIG. 14, the point at which the digitized track error signal level goes from negative to positive, and the point where it goes from positive to negative, are detected by means of Schmitt trigger circuits 103 and 104. Namely, the digitized track error signal is input to the Schmitt trigger circuit 104, and a pulse signal is output when the level of this track error signal goes from negative to positive. Moreover, the signal from an inverter 105 is input to the Schmitt trigger circuit 103. The digitized track error signal from the digitizing circuit 102 is input to the inverter 105. Namely, the inverted signal of the digitized track error signal is output from the inverter 105 to the Schmitt trigger circuit 103. The Schmitt trigger circuit 103 outputs a pulse signal when the level of the input inverted track error signal goes from negative to positive. That is, when the level of the (non-inverted) track error signal goes from positive to negative, a pulse signal comes to be output.

On the other hand, the focus error signal FE is input to the digitizing circuit 107. The focus error signal is digitized in the digitizing circuit 107 by comparison of the level of the focus error signal with the threshold value level output from the threshold value generating circuit 106. Moreover, the threshold value level can be changed by means of setting the threshold value level output from the threshold value generating circuit 106.

The outputs from the Schmitt trigger circuits 103, 104, and the digitizing circuit 107 are input to AND circuits 109-112. The AND circuits 109-112 have two input terminals, and output the logical product signal of the two input signals.

The output from the Schmitt trigger circuit 104 and the output from the digitizing circuit 107 are input to the AND circuit 112. Namely, when the level of the track error signal has gone from negative to positive, and also, when the level of the focus error signal is positive, a pulse is output from the AND circuit 112. From FIGS. 12(a)-(c) and 13(a)-(c), this is the case when the light spot is on a land track. Moreover, it is a case in which the light spot is moving towards the outer circumferential side (see FIGS. 12(a)-12(c)).

The output from the digitizing circuit 107 and the output from the Schmitt trigger 103 are input to the AND circuit 111. Namely, when the level of the track error signal has gone from positive to negative, and also, when the level of the focus error signal is positive, a pulse is output from the AND circuit 111. From FIGS. 12(a)-12(c) and 13(a)-13(c), this is the case when the light spot is on a land track. Moreover, it is a case in which the light spot is moving towards the inner circumferential side (see FIGS. 13(a)-13(c)).

The focus error signal from the digitizing circuit 107, via the inverter 108, is input as an inverted signal to the AND circuits 109, 110. The output signal from the Schmitt trigger circuit 103 is input to one input terminal of the AND circuit 109. Namely, when the level of the track error signal has gone from positive to negative, and also, when the level of the focus error signal is negative, a pulse is output from the AND circuit 109. From FIGS. 12(a)-12(c) and 13(a)-13(c), this is the case when the light spot is on a groove track. Moreover, it is a case in which the light spot is moving towards the outer circumferential side (see FIGS. 12(a)-12(c)).

The output signal from the Schmitt trigger circuit 104 is input to one input terminal of the AND circuit 110. Namely, when the level of the track error signal has gone from negative to positive, and also, when the level of the focus error signal is negative, a pulse is output from the AND circuit 110. From FIGS. 12(a)-(c) and 13(a)-(c), this case is when the light spot is on a groove track. Moreover, it is the case in which the light spot is moving towards the inner circumferential side (see FIGS. 13(a)-13(c)).

From the above, pulses are output from the AND circuits 111 and 112 when the light spot is on a land track, and pulses are output from the AND circuits 109 and 110 when the light spot is on a groove track. The outputs from these AND circuits are input to the control circuit 24.

At the point in time when the light beam is initially focused on a certain track, it is not known whether the focused track is a land track or a groove track. Accordingly, it is determined by means of the output of the above described land/groove discrimination circuit 51-1 whether the track on which the light spot is at present is a land track or a groove track.

The control circuit 24, by means of the output signal from the discrimination circuit 51-1, determines whether the track on which the light spot is present is a land track or a groove track. This determination, as described above, can be performed by means from which of the AND circuits of the discrimination circuit 51-1 a pulse was output. The control circuit 24 then, if it determines that the light spot is on a land track, performs control to close the switch circuit 17 to the land track control circuit 14 or, if it determines that the light spot is on a groove track, to close the switch circuit 17 to the groove track control circuit 15.

As a result, the tracking signal is output to the tracking actuator 11 in accordance with the track on which the light spot is positioned, and tracking control is commenced. The light spot can then continue to follow the focused track (land track or groove track).

For example, when the light spot has been determined to be on a land track, the tracking conditions are set corresponding to a land track. Pull-in control of tracking is then performed with respect to a land track. This control, by means of control signals which are output from the control circuit 24 within the system controller 20, is performed such that the output from the switch circuit 17 is selected. The control circuit 24 outputs a control signal in order to cause the output from the switch circuit 17 to be the tracking signal output from the land track control circuit 14. As a result, a tracking signal of appropriate polarity for the tracking control of land tracks is output from the switch control circuit 17. This tracking signal is sent to the tracking actuator 11, and the tracking actuator 11 performs pull-in control with respect to land tracking. After this, the light spot continues to follow the land track.

By means of the above operations, the light spot is under tracking control and focus control with respect to a certain land track. The light spot then continues to follow this land track, and continues under focus control on this land track surface.

In such a state in which the light spot follows the land track, an instruction is awaited from the host computer 30, which is located outside the replay device. An instruction is then received from the host computer to read out data of a certain sector. This instruction is input to the control circuit 24 within the system controller 20. The control circuit 24 determines whether the sector which received the readout instruction is present in a land track or is present in a groove track.

The control circuit 24 then finds the relative difference of the present head position (present track) and the position of the sector which received the readout instruction.

The control circuit 24 makes the tracking servo loop an open loop (servo OFF). This control sets switch circuit 17 to open, and may be such that the tracking signal is not output from the switch circuit 17.

The control circuit 24 next performs control which causes the optical head 4 to move in the direction of a target track, by means of sending a control signal to the positioner control circuit 19.

During the movement of the optical head 4, the track error signal as shown in FIG. 5(a) is output. A counter circuit 25 counts the pulse number of this track error signal. This count value is input to the control circuit 24. The number of tracks which the optical head crosses is known from this count value. Then, when the exact number of tracks have been crossed up to the target track (when the position of the light spot just comes above the target track), the movement of the optical head 4 is stopped, and the tracking servo is set to closed loop (servo ON). The stopping of the movement of the optical head 4 is performed by the control circuit 24 sending a control signal to the positioner control circuit 19. Setting of the tracking servo to a closed loop is performed by the control circuit 24 controlling the switch circuit 17. At this time, if the target track is a land track, a tracking signal of suitable polarity for tracking control of a land track is output from the switch circuit 17. Namely, the switch circuit 17 connects to the output side of the land track control circuit 14. If the target track is a groove track, a tracking signal of suitable polarity for tracking control of a groove track is output. Namely, the switch circuit 17 connects to the output side of the groove track control circuit 15. The target track is now considered to be a groove track.

The replay device replays the data from the track which the light spot followed due to the tracking control, and detects the track address.

The control circuit 24 confirms that the detected track address is a groove track address, and also that the sector which received the readout instruction is that in which the track is present.

If the detected track address is different from the target track address, the control circuit 24 again finds the relative difference of the present head position (present track) and the position of the sector which received the readout instruction (target track). The above-described operations are repeated.

Then, bringing about agreement of the present track address and the address of the track present in the sector which received the readout instruction, the replay device replays the data of the sector which received the readout instruction, and transfers the data which was read out to the external host computer. This operation is performed by means of the control computer 24 transferring to the host computer 30 the replay data from the data replay circuit 22.

After this, the replay device again waits for an instruction from the host computer.

### Embodiment 5

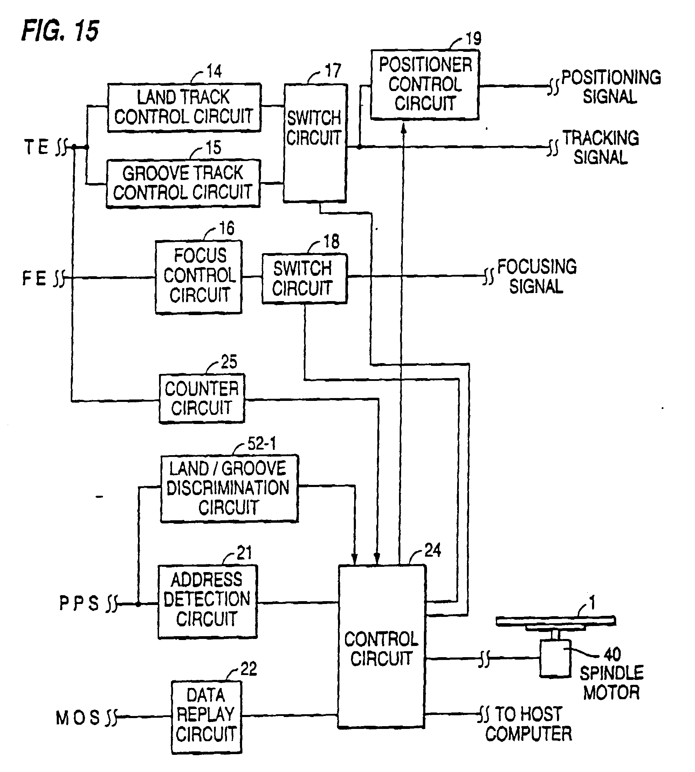

FIG. 15 is a diagram of the servo controller 10 and system controller 20 of FiG. 1, according to a fifth embodiment of the present invention.

The servo controller 10 in FIG. 15 comprises the land track control circuit 14, the groove track control circuit 15, the focus control circuit 16, the switch circuits 17, 18, and the positioner control circuit 19. Moreover, the system controller 20 in FIG. 15 comprises the address detection circuit 21, the data replay circuit 22, a land/groove discrimination circuit 52-1, and the control circuit 24.

The land track control circuit 14, the groove track control circuit 15, the focus control circuit 16, the switch circuits 17, 18, and the positioner control circuit 19 are similar in operation to those of the first embodiment (FIG. 4), and their description is therefore omitted here.

A phase pit signal (PPS) is input to the address detection circuit 21. A signal showing address data (address signal) is detected from within the phase pit signal by the address detection circuit 21.

Magneto-optical signals (MOS) are input to the data replay circuit 22. The magneto-optical signals MOS are then taken as replay data by the data replay circuit 22. The address signal output from the address detection circuit 21, and the replay data output from the data replay circuit 22, are input to the control circuit 24. The control circuit 24 sends to the host computer 30 the replay data from the region of the desired address.

The operation of the data recording medium replay device of the present embodiment example is next described.

First, a recording medium is inserted into the data record medium replay device. The control circuit 24, by sending a control signal to a spindle motor 40 shown in FIG. 15 begins the rotation of the spindle motor 40, and rotates the recording medium 1 which is located on a turntable. The replay device detects whether or not the inserted recording medium is a land/groove recording medium. This detection can be performed similar to that in the first embodiment.

The replay device causes rotation of the data recording medium at a predetermined rpm by means of the spindle motor 40 when the recording medium 1 is inserted. Next, the replay device drives the focus actuator 13 of the optical head 4 and performs pull-in control of the focus with respect to an optional track on the recording medium. This pull-in control of the focus is performed by the output of control signals by the control circuit 24 in the system controller 20, by means of the switch circuit 18 becoming closed. When the switch circuit 18 is in its closed state, the focusing signals from the switch circuit 18 are output to the focus actuator 13. Then, by the operation of the focus actuator 13, the light spot is caused to focus on the track surface.

When performing this kind of focus pull-in control, the switch circuit 17 is set open. Namely, the tracking signals are output to the tracking actuator 11 from neither the land track control circuit 14 nor the groove track control circuit 15. In this state, the tracking servo loop is in an open state (servo OFF).

In this case, because no tracking signal is output, the absolute position of the light spot does not change. However, because the tracks of the disc 1 have an eccentricity, the relative position of the light spot and the track of the disc 1 is displaced in the radial direction, due to the rotation of the disc 1. Accordingly, the light spot does not continue to illuminate the same track. The position of the light spot relative to the track is moving to the outside, or moving to the inside, according to the rotation of the disc 1.

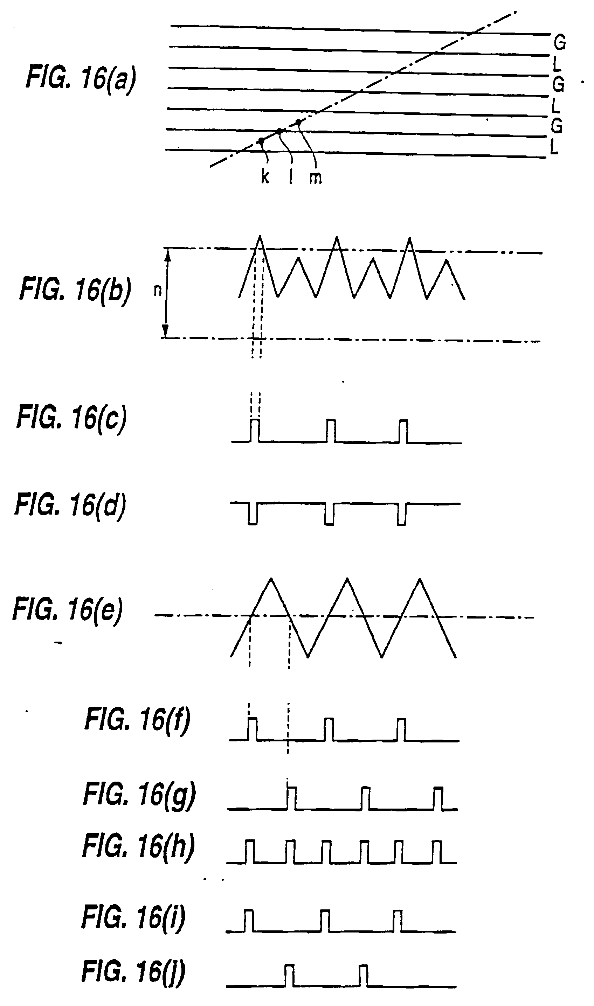

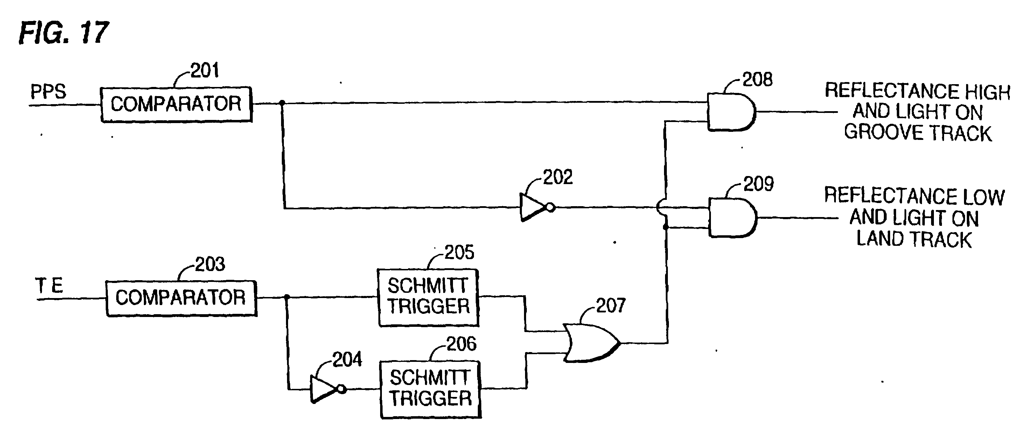

FIGS. 16(a)-16(j) are diagrams showing the change of the track error signal and the change of offset of the focus error signal, in the case in which the illumination position of the light spot has moved relative to the disc in the radial direction of the disc 1. Moreover, FIG. 17 shows the construction of the land/groove discrimination circuit 52-1 which discriminates whether the present position of the light spot is on a land track or on a groove track.

FIG. 16(a) shows the locus of movement of the light spot on the tracks. The portion denoted by the symbol k is a groove track, the portion denoted by the symbol I is the boundary of a groove track and a land track, and the portion denoted by the symbol m is a land track.

FIG. 16(b) shows the changes of reflectance. Since the intensity of the light beam which illuminates the recording medium is constant, the reflectance is represented by the level of the output signal of the detector 8 (FIG. 1). In an embodiment such as the present one, when the widths in the radial direction of a land track and a groove track are equal, the change in reflectance when the light beam illuminates respective positions is as follows. When the light spot is in a groove track (symbol k), the reflectance becomes a maximum. When the light beam is on the boundary of a groove track and a land track (symbol I), the reflectance is a minimum. When the light spot is in a land track (symbol m), the value of the reflectance is in the middle of these two.

A description will be given here of the land/groove discrimination circuit 52-1. In FIG. 17, a phase pit signal PPS is input to a comparator 201. The comparator 201 compares the level of the phase pit signal with a predetermined threshold level, and outputs a pulse when the level of the input phase pit signal is high. The threshold level is shown by n in FIG. 16(b). The level n is set to a value which is lower than the level of the phase pit signal when the light spot is in a groove track, but higher than the level of the phase pit signal when the light spot is in a land track. FIG. 16(c) shows the output pulses from the comparator 201. Moreover, the output from the comparator 201 is input to an inverter 202, the output being inverted. The pulses of FIG. 16(d) are low level when the pulses of FIG. 16(c) are high level, and are high level when the pulses of FIG. 16(c) are low level.

The track error signal is input to the comparator 203. FIG. 16(e) shows the waveform of the track error signal. The track error signal is input to the comparator 203. The track error signal is digitized in the comparator 203 by comparison of the level of the track error signal with a 0 V level.

The point at which the digitized track error signal output from the comparator 203 goes from negative to positive is when the light spot is in the center, in the radial direction, of a land track.

The Schmitt trigger circuits 205 and 206 detect the point at which the digitized track error signal level goes from negative to positive, or goes from positive to negative. Namely, the digitized track error signal is input to the Schmitt trigger circuit 205, and when the level of this track error signal goes from negative to positive, a pulse signal is output. Moreover, the signal from the inverter 204 is input to the Schmitt trigger circuit 206. The digitized track error signal from the digitizing circuit 203 is input to the inverter 204. Namely, the inverted, digitized track error signal is output from the inverter 204, and is input to the Schmitt trigger 206. The Schmitt trigger 206 outputs a pulse when the level of the inverted track error signal goes from negative to positive. That is, when the level of the (non-inverted) track error signal goes from positive to negative, a pulse signal is output.

FIG. 16(f) shows the waveform of the output signal from the Schmitt trigger circuit 205. As can be seen from this Figure, a pulse is output from the Schmitt trigger circuit 205 when the level of the track error signal goes from negative to positive. Moreover, FIG. 16(g) shows the waveform of the output signal from the Schmitt trigger circuit 206. As can be seen from this Figure, a pulse is output from the Schmitt trigger circuit 206 when the level of the track error signal goes from positive to negative.

The outputs from the Schmitt trigger circuits 205 and 206 are input to an OR circuit 207. The OR circuit 207 outputs the logical sum signal of two input signals. FIG. 16(h) shows the waveform of the output signal from the OR circuit 207. As can be seen from the Figure, a pulse is output from the OR circuit 207 when the level of the track error signal goes from negative to positive or from positive to negative.

By means of the above construction, a pulse is output from the OR circuit 207 when the light spot comes to the center of a track (land track or groove track). The output from the OR circuit 207 is input to one input terminal of each of the AND circuits 208 and 209. The output from the comparator 201 is input to the other terminal of the AND circuit 208. Moreover, the output from the inverter 202 is input to the other terminal of the AND circuit 209.

The AND circuits 208 and 209 output the logical product of their respective two inputs. FIG. 16(i) shows the waveform of the output signal from the AND circuit 208, and FIG. 16(j) shows the waveform of the output signal from the AND circuit 209. A pulse is output from the AND circuit 208 when the reflectance is greater than a predetermined value and, in addition, the light spot is in the middle of a track (namely, when the light spot is on a groove track). Moreover, the AND circuit 209 outputs a pulse when the reflectance is less than a predetermined value, and in addition, the light spot is in the center of a track (namely, when the light spot is on a land track).

By means of a constitution such as the above, by the output of a pulse from one or other of the AND circuits 208, 209, whether the present position of the light spot is a land track or a groove track can be discriminated.

At the point in time when the light beam is initially focused on a certain track, it is not known whether the focused track is a land track or a groove track. Accordingly, it is determined by means of the output of the land/groove discrimination circuit 52, whether the track on which the light spot is presently at is a land track or a groove track.

The control circuit 24, by means of the output signal from the discrimination circuit 52-1, determines whether the track on which the light spot is present at is a land track or a groove track. This determination, as described above, can be performed by means from which of the AND circuits of the discrimination circuit 52-1 a pulse was output. The control circuit 24 then, if it determines that the light spot is on a land track, performs control to close the switch circuit 17 to the land track control circuit 14 or, if it determines that the light spot is on a groove track, to close the switch circuit 17 to the groove track control circuit 15.

As a result, the tracking signal is output to the tracking actuator 11 in accordance with the track on which the light spot is positioned, and tracking control is commenced. The light spot can then continue to follow the focused track (land track or groove track).

For example, when the light spot has been determined to be on a land track, the tracking conditions are set corresponding to a land track. Pull-in control of tracking is then performed with respect to a land track. This control, by means of control signals which are output from the control circuit 24 within the system controller 20, is performed such that the output from the switch circuit 17 is selected. The control circuit 24 outputs a control signal in order to cause the output from the switch circuit 17 as a tracking signal output from the land track control circuit 14. As a result, a tracking signal of appropriate polarity for the tracking control of land tracks is output from the switch control circuit 17. This tracking signal is sent to the tracking actuator 11, and the tracking actuator 11 performs pull-in control with respect to land tracking. After this, the light spot continues to follow the land track.

By means of the above operations, the light spot is under tracking control and focus control with respect to a certain land track. The light spot then continues to follow this land track, and continues under focus control on this land track surface.

In such a state in which the light spot follows the land track, an instruction is awaited from the host computer 30, which is located outside the replay device. An instruction is then received from the host computer to read out data of a certain sector. This instruction is input to the control circuit 24 within the system controller 20. The control circuit 24 determines whether the sector which received the readout instruction is present in a land track or is present in a groove track.

The control circuit 24 then finds the difference of the relative positions of the present head position (present track) and the position of the sector which received the readout instruction (target track).

The control circuit 24 sets the tracking servo loop to be open (servo OFF). This control takes the switch circuit 17 to be open, and may be such that no tracking signals are output from the switch circuit 17.

The control circuit 24 next performs control which causes the optical head 4 to move in the direction of a target track, by means of sending a control signal to the positioner control circuit 19.

During the movement of the optical head 4, the track error signal as shown in FIG. 5(a) is output. A counter circuit 25 counts the pulse number of this track error signal. This count value is input to the control circuit 24. The number of tracks which the optical head crosses is known from this count value. Then, when the exact number of tracks have been crossed up to the target track (when the position of the light spot just comes above the target track), the movement of the optical head 4 is stopped, and the tracking servo is set to closed loop (servo ON). The stopping of the movement of the optical head 4 is performed by the control circuit 24 sending a control signal to the positioner control circuit 19. Setting of the tracking servo to a closed loop is performed by the control circuit 24 controlling the switch circuit 17. At this time, if the target track is a land track, a tracking signal of suitable polarity for tracking control of a land track is output from the switch circuit 17. Namely, the switch circuit 17 connects to the output side of the land track control circuit 14. If the target track is a groove track, a tracking signal of suitable polarity for tracking control of a groove track is output. Namely, the switch circuit 17 connects to the output side of the groove track control circuit 15. The target track is now considered to be a groove track.

The replay device replays the data from the track which the light spot followed due to the tracking control, and detects the track address.

The control circuit 24 confirms that the detected track address is a groove track address, and also that the sector which received the readout instruction is that in which the track is present.

If the detected track address is different from the target track address, the control circuit 24 again finds the relative difference of the present head position (present track) and the position of the sector which received the readout instruction (target track). The above-described operations are repeated.

Then, bringing about agreement of the present track address and the address of the track present in the sector which received the readout instruction, the replay device replays the data of the sector which received the readout instruction, and transfers the data which was read out to the external host computer. This operation is performed by means of the control circuit 24 transferring to the host computer 30 the replay data from the data replay circuit 22.

After this, the replay device again waits for an instruction from the host computer.

Although a few preferred embodiments of the present invention have been shown and described, it would be appreciated by those skilled in the art that changes may be made in these embodiments without departing from the principles and spirit of the invention, the scope of which is defined in the claims and their equivalents.

In one embodiment the replay device is provided with a housing, for example of plastics material, including one or more user controls, for example an on/off switch, eject button, etc.

## Claims

1. A data replay device, comprising:
an optical head including a laser light source, which illuminates with laser light a track surface of a disc-shaped data recording medium having, in at least one of concentric and spiral form, data tracks of a first group and data tracks of a second group, on which data is recorded, the data tracks of the first group and data tracks of the second group being present alternately at a difference of level in a radial direction of the recording medium; and
a detection circuit which detects whether the track which the laser light is illuminating is from said first group or from said second group.

2. A data replay device according to claim 1, wherein said detection circuit detects whether the track which the laser light is illuminating is one of said first group of tracks or one of said second group of tracks by a received light signal of reflected light of the laser light from the recording medium.

3. A data replay device according to claim 1, further comprising:
a changeover circuit which changes a control condition, based on the detection result of said detection circuit.

4. A data replay method, comprising the steps of:
illuminating laser light on a track surface of a disc-shaped data recording medium, on which there are present, in at least one of a concentric and spiral form, data tracks of a first group and data tracks of a second group, on which data is recorded, the data tracks of the first group and data tracks of the second group being present alternately at a difference of level in a radial direction of the recording medium; and
detecting whether the track which the laser light is illuminating is from the first group or from the second group.

5. A data replay method according to claim 4, further comprising changing a control condition based on the detection result according to said detecting step.

6. A data replay device which replays data from a disc-shaped recording medium on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, and address data is recorded, in order to index the recorded data, in the tracks of the first group and the tracks of the second group, respectively, the replay device comprising:
an address readout circuit which reads out the address data by converging laser light on a track surface of the recording medium, and
a determination circuit which determines whether the address data read out by the address readout circuit is address data of a track of the first group or second group.

7. A data replay device which replays data from a disc-shaped recording medium on which there are present, in at least one of a concentric and spiral form, data tracks of a first group and data tracks of a second group, on which data is recorded, the data tracks of the first group and data tracks of the second group being present alternately at a difference of level in a radial direction, and address data is recorded in order to index the recorded data, in the tracks of the first group and the tracks of the second group, respectively, the replay device comprising:
a rotary member which causes the recording medium to rotate;
a head which reads out recorded data by shining laser light on a track surface of the recording medium;
a tracking control circuit which causes an illumination position of the laser light to follow a track of the first group or a track of the second group in accordance with a tracking signal;
a setting circuit which sets a condition of a tracking control with respect to the track of the first group or a condition of a tracking control with respect to the track of the second group;
an address readout member which reads out the address data by converging laser light on the track surface of the recording medium; and
a determination circuit which determines whether the address data read out by the address readout member is address data of a track of the first group or second group.

8. A data replay device of claim 7, wherein a setting of a condition of the tracking control by the setting circuit is a setting which changes polarity of the tracking signal used during tracking control by the tracking control circuit.

9. A data replay method, comprising the steps of:
replaying data from a disc-shaped data recording medium, on which there are present, in at least one of a concentric and spiral form, data tracks of a first group and data tracks of a second group, on which data is recorded, the data tracks of the first group and data tracks of the second group being present alternately at a difference of level in a radial direction of the recording medium, and address data is recorded in order to index the recorded data, in the tracks of the first group and the tracks of the second group, respectively;
reading out the address data by converging a light beam on a track of the recording medium; and
determining by the read-out address data whether the read-out address data is address data of a track of the first group or of the second group.

10. A data replay method, comprising the steps of:
replaying data from a disc-shaped data recording medium, on which there are present, in at least one of concentric and spiral form, data tracks of a first group and data tracks of a second group, on which data is recorded, the data tracks of the first group and data tracks of the second group being present altemately at a difference of level in a radial direction of the recording medium, and address data is recorded in order to index the recorded data, in the tracks of the first group and the tracks of the second group, respectively;
causing the recording medium to rotate;
reading out the address data by converging a light beam on a track surface of the recording medium;
determining by the read-out address data whether the read-out address data is address data of a track of the first group or of the second group; and
according to the result of the determining step, setting a condition of tracking control with respect to the track of the first group or a condition of the tracking control with respect to the track of the second group.

11. A data replay device which replays data by a laser light which shines on a track surface of a disc-shaped data recording medium, on which there are present, in at least one of a concentric and spiral form, data tracks of a first group and data tracks of a second group, on which data is recorded, the data tracks of the first group and data tracks of the second group being present alternately at a difference of level in a radial direction, the data replay device comprising:
a rotary member that causes rotation of the recording medium;
a signal generation circuit which generates a tracking error signal showing an amount of displacement of an illumination position of the laser light and the track of the first group or the track of the second group; and
a determination circuit that determines by a change in the tracking error signal, whether the track which the laser light is illuminating is a track of the first group or a track of the second group.

12. A data replay device which replays data by a laser light which shines on a track surface of a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, the data replay device comprising:
a rotary member that causes rotation of the recording medium;
a signal generation circuit which generates a tracking error signal showing an amount of displacement of an illumination position of the laser light on the track of the first group or the track of the second group;
a tracking control circuit which causes the illumination position of the laser light to follow a track of the first group or a track of the second group;
a setting member which sets a condition of the tracking control circuit with respect to the track of the first group or a condition of the tracking control circuit with respect to the track of the second group; and
a determination circuit which determines, by a change in the tracking error signal, whether the track which the laser light is illuminating is a track of the first group or a track of the second group, and which sets the condition of the tracking control circuit according to the result of this determination.

13. A data replay device according to claim 12, wherein the setting of the condition of the tracking control circuit by the setting member is a setting which changes the polarity of the tracking signal used during tracking control.

14. A data replay method, comprising the steps of:
replaying data by a laser light which shines on a track surface of a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium;
rotating the recording medium;
generating a tracking error signal showing an amount of displacement of an illumination position of the laser light and the track of the first group or the track of the second group; and
determining, by a change in the tracking error signal, whether the track which the laser light is illuminating is a track of the first group or a track of the second group.

15. A data replay method, comprising the steps of:
replaying data by a laser light which illuminates a track surface of a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium;
rotating the recording medium;
generating a tracking error signal showing an amount of displacement of an illumination position of the laser light and the track of the first group or the track of the second group;
determining, by a change in the tracking error signal, whether the track which the laser light is illuminating is a track of the first group or a track of the second group; and
setting a control condition of tracking control, in order to cause the illumination position of the laser light to follow a track of the first group or a track of the second group, to the condition of the tracking control with respect to the track of the first group or to the condition of the tracking control with respect to the track of the second group.

16. A data replay device which replays data from a disc-shaped data recording medium, on which there are present, in at least one of a concentric and spiral form, data tracks of a first group and data tracks of a second group, on which data is recorded, the data tracks of the first group and data tracks of the second group being present alternately at a difference of level in a radial direction of the recording medium, and the tracks of the first group and the tracks of the second group, respectively, being divided into a plurality of sectors which are recorded units of data, and predetermined marks are recorded in predetermined positions of the sectors, the marks differing in the data tracks of the first group and the data tracks of the second group, the data replay device comprising:
a detection circuit that detects the marks by the shining of a laser light on the tracks surface of the recording medium; and
a determination circuit which determines, by the marks detected by the detection circuit, whether the record track on which the laser light is shining is a track of the first group or second group.

17. A data replay device which replays data from a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, and the tracks of the first group and the tracks of the second group, respectively, being divided into a plurality of sectors which are recorded units of data, and predetermined marks are recorded in predetermined positions of the sectors, the marks differing in the data tracks of the first group and the data tracks of the second group, the data replay device comprising:
a head which reads out recorded data by illuminating with laser light the tracks of the recording medium;
a tracking control circuit which causes an illumination position of the laser light to follow a track of the first group or a track of the second group, and
a setting circuit which sets a control condition of the tracking control circuit with respect to the track of the first group or a control condition of the tracking control circuit with respect to the track of the second group; and
a detection circuit which detects the marks, by the data read by the head; and
a determination circuit which determines, by the marks detected by the detection circuit, whether the data track illuminated by the laser light is a track of the first group or second group, and sets the control condition according to this determination result.

18. A data replay device according to claim 17, wherein the setting of the condition of the tracking control by the setting circuit is a setting which changes polarity of the tracking signal used during the tracking control.

19. A data replay method, comprising the steps of:
replaying data by the laser light which shines on a track surface of a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, and the tracks of the first group and the tracks of the second group, respectively, being divided into a plurality of sectors which are recording units of data, and predetermined marks are recorded in predetermined positions of the sectors, the marks differing in the data tracks of the first group and the data tracks of the second group;
detecting the marks by shining the laser light on the tracks surface of the recording medium; and
determining by the detected marks, whether the track which the laser light is illuminating is a track of the first group or second group.

20. A data replay method, comprising the steps of:
replaying data by laser light which shines on a track surface of a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, and the tracks of the first group and the tracks of the second group, respectively, being divided into a plurality of sectors which are recording units of data, and predetermined marks are recorded in predetermined positions of the sectors, the marks differing in the data tracks of the first group and the data tracks of the second group;
rotating the recording medium;
detecting the marks by shining the laser light on a track surface of the recording medium;
determining, by the detected marks, whether the track which the laser light is illuminating is a track of the first group or second group; and
setting a condition of tracking control according to the result of the determining step with respect to the tracking control of the first group or the condition with respect to the tracking control of the second group.

21. A data replay device which replays recorded data from a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, by shining laser light on the respective tracks, the data replay device comprising:
a focus control circuit which causes the laser light to converge on a track surface of the recording medium;
a focus offset detection circuit which detects focus offset in the focus control circuit; and
a determination circuit which determines, by the detection result of the focus offset detection circuit, whether the track on which the laser light shines is a track of the first group or a track of the second group.

22. A data replay device which replays recorded data from a disc-shaped data recording medium, on which there are present, in at least one of a concentric and spiral form, data tracks of a first group and data tracks of a second group, on which data is recorded, the data tracks of the first group and the data tracks of the second group being present alternately at a difference of level in a radial direction of the recording medium, by shining laser light on the respective tracks of the data replay device comprising:
a focus control circuit which causes the laser light to converge on a track surface of the recording medium;
a focus offset detection circuit which detects the focus offset in the focus control circuit;
a tracking control circuit which causes an illumination position of the laser light to follow a track of the first group or a track of the second group;
a setting circuit which sets a control condition of tracking control with respect to the track of the first group or a control condition of the tracking control with respect to the track of the second group; and
a determination circuit which determines, from the detection result of the focus offset detection circuit, whether the track on which the laser light shines is a track of the first group or a track of the second group, and according to this determination result, sets the control condition.

23. A data replay device according to claim 22, wherein the setting of the condition of the tracking control by the setting circuit is a setting which changes polarity of a tracking signal used during the tracking control.

24. A data replay device according to claim 22, wherein the data replay device further comprises a signal generation circuit which generates a tracking error signal showing an amount of displacement of the illumination position of the laser light and the track of the first group or the track of the second group, and wherein the determination circuit performs the determination by the focus offset detection result and the tracking error signal.

25. A data replay device which replays recorded data from a disc-shaped data recording medium, on which there are present, in at least one of a concentric and a spiral form, data tracks of a first group and data tracks of a second group, on which data is recorded, the data tracks of the first group and data tracks of the second group being present alternately at a difference of level in a radial direction of the recording medium, by illuminating the respective tracks with laser light, the data replay device comprising:
a focus control circuit which causes the laser light to converge on a track surface of the recording medium;
a detection circuit which detects reflectance of the surface illuminated by the laser light; and
a determination circuit which determines, from the detection result of the detection circuit, whether the track on which the laser light shines is a track of the first group or a track of the second group.

26. A data replay device which replays recorded data from a disc-shaped data recording medium, on which there are present, in at least one of a concentric and a spiral form, data tracks of a first group and data tracks of a second group, on which data is recorded, the data tracks of the first group and data tracks of the second group being present altemately at a difference of level in a radial direction of the recording medium, by shining laser light on the respective tracks, the data replay device comprising:
a focus control circuit which causes the laser light to converge on a track surface of the recording medium;
a detection circuit which detects the reflectance of the surface illuminated by the laser light;
a tracking control circuit which causes an illumination position of the laser light to follow a track of the first group or a track of the second group;
a setting circuit which sets a second control condition of tracking control with respect to the track of the first group or a control condition of tracking control with respect to the track of the second group; and
a determination circuit which determines, from the detection result of the detection circuit, whether the track on which the laser light shines is a track of the first group or a track of the second group, and according to this determination result, sets a second control condition.

27. A data replay device according to claim 26, wherein the setting of the control condition of the tracking control by the setting circuit is a setting which changes polarity of a tracking signal used during the tracking control.

28. A data replay device according to claim 1, wherein the detection circuit includes a light receiving member which receives reflected light of the laser light from a surface of the recording medium, and outputs a signal according to the amount of received light.

29. A data replay device according to claim 2, wherein the detection circuit includes a light receiving member which receives reflected light of the laser light from a surface of the recording medium, and outputs a signal according to the amount of received light.

30. A data replay device according to claim 26, wherein the detection circuit includes a light receiving member which receives reflected light of the laser light from a surface of the recording medium, and outputs a signal according to the amount of received light.

31. A data replay device according to claim 26, wherein the data replay device further comprises a signal generating circuit which generates a tracking signal showing a displacement amount of an illumination position of the laser light and the track of the first group or track of the second group, and wherein the determination circuit performs a determination according to the detection result of the detection circuit and the tracking signal.

32. A data replay device according to any of claims 1 to 3, 6 to 8, 11 to 13, 16 to 18 or 21 to 31, further comprising a housing including one or more user controls.
